# EUROPÄISCHE PATENTSCHRIFT

(11) **EP 2 614 127 B1**
(45) Veröffentlichungstag und Bekanntmachung des Hinweises auf die Patenterteilung: **25.03.2015**
(21) Anmeldenummer: 11752107.0
(22) Anmeldetag: 16.08.2011
(51) Int. Cl.: C10B 15/02, C10B 43/10

(54) **VERFAHREN UND VORRICHTUNG ZUR AUTOMATISCHEN ENTFERNUNG VON KOHLENSTOFFABLAGERUNGEN AUS DEN OFENKAMMERN UND STRÖMUNGSKANÄLEN VON "NON-RECOVERY"- UND "HEAT-RECOVERY"-KOKSÖFEN**
METHOD AND APPARATUS FOR AUTOMATIC REMOVAL OF CARBON DEPOSITS FROM THE OVEN CHAMBERS AND FLOW CHANNELS OF NON-RECOVERY AND HEAT-RECOVERY COKE OVENS
PROCÉDÉ ET DISPOSITIF POUR L'ENLÈVEMENT AUTOMATIQUE DE DÉPÔTS DE CARBONE DES CHAMBRES DE FOUR ET CANAUX D'ÉCOULEMENT DE FOURS À COKE "SANS RÉCUPÉRATION" ET "À RÉCUPÉRATION DE CHALEUR"

(30) Priorität: 10.09.2010 DE 102010044938
(43) Veröffentlichungstag der Anmeldung: 17.07.2013
(73) Patentinhaber: ThyssenKrupp Industrial Solutions AG, 45143 Essen (DE)
(72) Erfinder: KIM, Ronald, 45144 Essen (DE)
(74) Vertreter: ThyssenKrupp AG - IP Services
(86) Internationale Anmeldenummer: PCT/EP2011/004110
(87) Internationale Veröffentlichungsnummer: WO 2012/031665

(56) Entgegenhaltungen:
- WO-A1-2006/128612
- DE-A1- 3 701 875
- US-A- 4 124 450

## Beschreibung

Die Erfindung betrifft ein Verfahren zur automatischen Entfernung von Kohlenstoffablagerungen aus den Strömungskanälen von "Non-Recovery" und "Heat-Recovery"-Koksöfen, wobei eine Koksofenbank, welche typischerweise aus mehreren und nebeneinandergereihten Koksofenkammern besteht, zur zyklischen Verkokung von Kohle genutzt wird, und wobei eine mit Überdruck arbeitende Luftdosiereinrichtung verwendet wird, um Kohlenstoffablagerungen in den Strömungsquerschnitten des Ofensystems durch Verbrennung zu entfernen und damit einer Verringerung der Ofenleistung entgegenzuwirken. Die Erfindung betrifft auch eine Vorrichtung, mit der dieses Verfahren ausführbar ist, wobei diese Vorrichtung in die Koksofenbank und mindestens eine Koksofenkammer integriert ist, so dass die Kohlenstoffablagerungen ohne Veränderung einer Anordnung während des Betriebes entfembar sind.

Die Verkokung von Kohle zu Koks wird häufig in Koksofenkammern vom sogenannten "Heat-Recovery"- oder "Non-Recovery"-Typ ausgeführt, welche sich von den konventionellen Koksofenkammern dadurch unterscheiden, dass das bei der Verkokung entstehende Verkokungsgas nicht aufgefangen und verwertet wird, sondern zur Verbrennung und Beheizung genutzt wird. Das bei der Verkokung entstehende Gas gelangt bei der Verkokung in diesem Ofentyp in einen Gasraum, welcher sich über dem Kohlekuchen befindet, wo dann eine Teilverbrennung des Verkokungsgases mit einer unterstöchiometrischen Menge an Luft stattfindet. Dadurch wird der Kohle- oder Kokskuchen von oben beheizt. Der über dem Kokskuchen liegende Gasraum wird auch Primärheizraum genannt.

Aus dem Primärheizraum gelangt das teilverbrannte Verkokungsgas über sogenannte "Downcomer"-Kanäle in die Rauchgaskanäle, welche sich unter dem Boden der Koksofenkammer befinden und welche zur vollständigen Verbrennung des teilverbrannten Verkokungsgases vorgesehen sind. Diese werden über die Sekundärluftsohlen, welche mit der Außenatmosphäre verbunden sind, mit sekundärer Verbrennungsluft versorgt. Der unter dem Kokskuchen liegende Gasraum wird auch Sekundärheizraum genannt. Die vertikal angeordneten, in Strömungsrichtung abwärtsgerichteten "Downcomer"-Kanäle befinden sich in den meisten Ausführungsformen in den nichtfrontalen Seitenwänden der Koksofenkammern, wodurch das teilverbrannte Verkokungsgas in die Rauchgaskanäle gelangt.

Eine Ausführungsform für Koksofenkammern, welche Downcomer-Kanäle in den Seitenwänden zeigen, beschreibt die WO 2009077082 A2. Diese Erfindung betrifft eine Vorrichtung zur Zuführung und Regelung von Sekundärluft aus den Sekundärluftkanälen in die Rauchgaskanäle von horizontalen Koksofenkammern. Die Rauchgaskanäle befinden sich dabei unter dem Koksofenkammerboden, auf dem die Verkokung stattfindet. In die Verbindungskanäle zwischen den Rauchgaskanälen und den Sekundärluftkanälen, welche der Zuführung von Sekundärluft dienen, sind Regelelemente eingebaut, die den Luftstrom in die Rauchgaskanäle genau steuern können. Die Koksofenkammer besitzt Downcomer-Kanäle zur Ableitung der teilverbrannten Gase aus dem Verkokungsprozess, die in die seitliche Koksofenkammerwand integriert sind, wobei diese Downcomer-Kanäle den Koksofenkammerinnenraum mit den Rauchgaskanälen verbinden.

Die Zahl der Downcomer-Kanäle beträgt in einer Koksofenkammerwand in den meisten Ausführungsformen bis zu 12, pro Ofen können also insgesamt 24 Downcomerkanäle vorgesehen werden. Die Downcomer-Kanäle sind abwärts gerichtet und in den meisten Ausführungsformen in den Wänden der Koksofenkammern angeordnet, da jeweils zwei Wände eine Koksofenkammer seitlich einschließen. Im oberen Abschnitt eines Downcomer-Kanals kann der Strömungsquerschnitt mittels eines Justierorgans verändert und somit der Abgasvolumenstrom eines Kanals in Ofenlängsrichtung justiert werden.

Das teilverbrannte Verkokungsgas setzt sich aus den Gaskomponenten Wasserstoff, Kohlenmonoxid, Wasser, Methan, sowie in geringeren Anteilen Äthan, Äthen, Propan, Propen und höheren Kohlenwasserstoffen wie beispielsweise Benzol, Toluol oder Xylol zusammen. Dieses enthält somit flüchtige Verbindungen, welche in den Downcomer-Kanälen kondensieren oder pyrolysieren können, und zu unerwünschten Kohlenstoffablagerungen führen. Die gebildeten Kohlenstoffablagerungen bestehen aus teerhaltigen, rußbildenden Verbindungen und insbesondere Graphit und können im Laufe der Betriebszeit erhebliche Mengen bilden. Diese bilden sich insbesondere in den Downcomer-Kanälen, wenn in diesen zu geringe Temperaturen herrschen und keine weitere Verbrennungsluft zugelassen wird. Diese verengen oder blockieren dadurch die Strömungsquerschnitte der Downcomer-Kanäle.

Die US 6187148 B1 beschreibt ein Ventil für einen Non-Recovery-Koksofen, durch den eine verbesserte Kontrolle des Gasdruckes im Innenraum einer Koksofenkammer und eine Zufuhr von Luft in die Downcomer-Kanäle möglich ist. Das Ventil besitzt einen rotierenden Verschlussstopfen mit einem abgeschrägten Ende, durch das das Innere der Koksofenkammer mit dem Downcomer stufenlos verbunden oder abgetrennt werden kann, um den Gasdruck im Inneren des Ofens zu regeln. Durch die Kontrolle des Gasdrucks lässt sich die Menge an Verbrennungsluft in Abhängigkeit von den Temperaturgradienten steuern, welche in den Ofen eingelassen wird. Die Verbrennung eines Mehrteils an Verkokungsgas in den Sekundärheizräumen unter der Koksofenkammer erzeugt in Abhängigkeit vom Öffnungsgrad des Ventils einen thermischen Gradienten durch den Koksofenkammerboden, wodurch die Qualität des Kokses erheblich verbessert wird. Die Schrift beschreibt nicht die Bildung von Ablagerungen durch die Pyrolyse von Verkokungsgas.

Infolge der Kombination aus geringem Sauerstoffpartialdruck und geringer Temperatur lagern sich diese abgespaltenen Kohlenstoffverbindungen beispielsweise in Form von elementarem Kohlenstoff, Graphit, Teer, Russ oder ähnlichen Verbindungen vorzugsweise an den Eintrittsquerschnitten oder innerhalb der abwärts in den Unterofen gerichteten Downcomer-Kanäle ab. Die kohlenstoffhaltigen Ablagerungen stellen für den Betrieb der Koksofenkammern einen erheblichen Störfaktor dar. Diese Ablagerungen verengen beispielsweise gasleitende Einrichtungen, so dass der Gasfluss zur Beheizung verlangsamt oder sogar verhindert wird.

Dieses Problem wird praktisch bisher so gelöst, dass in Abhängigkeit vom visuellen Erscheinungsbild der Ofenemissionen und in Abhängigkeit von der geschätzten Ofenleistung periodisch Druckluft in die Downcomer-Kanäle zugeführt wird, so dass die Kohlenstoffablagerungen durch den Druckluftimpuls aus dem Querschnitt entfernt werden. Hierzu werden die auf der Ofendecke angeordneten, verschließbaren Inspektionsöffnungen der Downcomer-Kanäle genutzt, die im geöffneten Zustand einen Zugang zu den darunter befindlichen Kanälen gewähren. Zur Reinigung dieser Kanäle wird für einen bestimmten Zeitraum durch das Bedienungspersonal Druckluft über eine Druckluftlanze manuell in die Inspektionsöffnung eingeblasen. Durch die eingeleitete Druckluft werden die Kohlenstoffablagerungen im weiteren Strömungsverlauf mit den in der Luft enthaltenen freien OH-Radikalen verbrannt. Die Druckluftversorgung wird beispielhaft durch einen mobilen Kompressor sichergestellt.

Dieses manuelle Verfahren entfernt zwar die Kohlenstoffablagerungen, ist jedoch fehleranfällig, da bei geschlossenen Ofentüren die Eintrittsquerschnitte der Downcomer-Kanäle während des Betriebes von der Ofendecke aus nicht einsehbar sind. Die gleichzeitig verringerte Prozessgeschwindigkeit hat wiederum häufig Verzögerungen im Betriebsablauf zur Folge.

Eine permanente Zuführung von Luft in die Downcomer-Kanäle der abwärts gerichteten, seitlichen Kammerwänden führt bereits zur vollständigen Verbrennung der teilverbrannten Rohgase und ist aufgrund der damit verbundenen verringerten Heizleistung in den in Strömungsrichtung nachfolgenden Rauchgaskanälen unterhalb der Ofenkammer unerwünscht. Durch die Verengung oder Blockierung der Downcomer-Kanäle verringert sich in der Ofenkammer oberhalb der Kohle der Unterdruck oder es entsteht sogar ein Überdruck. Bei Verringerung des Unterdruckes verringert sich der eingesaugte Luftanteil, bei Vorliegen eines Überdruckes kann die erforderliche Primärverbrennungsluft nicht mehr in die Ofenkammer strömen. Das freigesetzte Rohgas entweicht in diesem Fall aus den Primärluftöffnungen in der Ofendecke und Ofentür und verursacht eine erhebliche Emissionsbelastung der Umgebung. Es wird deswegen nach Möglichkeiten gesucht, diese Ablagerungen entweder zu vermeiden oder aber periodisch zu entfernen. Eine visuelle Überwachung ist jedoch aus praktischen und wirtschaftlichen Gründen unerwünscht.

Die Verkokung von Kohle nach dem "Non-Recovery" oder "Heat Recovery" - Prinzip folgt einem bestimmten Verkokungszyklus, in dessen Verlauf sich an den jeweiligen Stellen der Koksofenkammer bestimmte Werte der Temperatur und des Druckes einstellen. Bei der Verkokung wird eine bestimmte Kohlemenge mit Umgebungstemperatur in die zu befüllende, unterstöchiometrisch betriebene Ofenkammer oberhalb der Ofensohle eingelassen. Dadurch bedingt erfolgt in dieser Ofenkammer zunächst ein Temperaturabfall, der durch Thermoelemente dokumentiert werden kann, die gewöhnlich im Bereich des Ofenkammergewölbes angeordnet sind.

Im Normalbetrieb ist nach dem Füllvorgang im Zeitintervall τ / τ_{End} = 0 bis 0,15 der Temperaturabfall in der Ofenkammer dadurch gekennzeichnet, dass sich ein Temperaturminimum der Ofenkammertemperatur je nach Ofentyp zwischen 800 °C und 1150°C einstellt. Das Verhältnis τ / τ_{End} entspricht der normierten Betriebszeit des Ofens. Ausgehend von einem Ausgangstemperaturniveau von ca. 1000°C bis 1450°C zum Zeitpunkt der Ofenbefüllung (τ / τ_{End} = 0) verringert sich die Temperatur in der Ofenkammer je nach Ofentyp kurzzeitig um ca. 200 °C bis 350 °C. Im anschließenden Zeitintervall τ / τ_{End} = 0,15 bis 1,0 nähert sich die Ofenkammertemperatur wieder dem Ausgangstemperaturniveau an.

Die DE 102006004669 A1 lehrt einen Verkokungsofen in Flachbauweise, einen so genannten Non-Recovery- oder Heat-Recovery-Verkokungsofen, der mindestens eine Messvorrichtung zur Konzentrationsmessung von Gasbestandteilen der Koksofenkammer, der Koksofensohle und/oder des Abgaskanals aufweist und bei welchem auf Basis dieser Daten über einen Prozessrechner die optimale Zuführung von Primär- und/oder Sekundärluft ermittelt und geregelt wird. Ebenso ist von der Erfindung ein Verkokungsverfahren unter Einsatz eines solchen Verkokungsofens umfasst. Die Erfindung lehrt die Anwendung von Messparametem zur automatisierten Steuerung der Zuführung von Verbrennungsluft, beschreibt jedoch nicht die Entfernung von kohlenstoffhaltigen Belägen mit den Besonderheiten dieser Aufgabe.

Die US 4124450 A beschreibt ein Verfahren zur Reduzierung der zugeführten Primärluftmenge in eine Koksofenkammer während der gesamten Verkokungsperiode, indem die Menge an erhitzter Sekundärluft für die Verbrennung des teilverbrannten Verkokungsgases in den seitlichen "Downcomer"-Kanälen so gehalten wird, dass in den seitlichen "Downcomer"-Kanälen eine Temperatur von 1200°F bis 2400°F eingestellt wird, und in den unter der Koksofenkammer liegenden Sekundärluftsohlen eine Temperatur von 1800°F bis 2700°F eingestellt wird, wobei durch weitere Verbrennung von unvollständig verbranntem Verkokungsgas aus den "Downcomer"-Kanälen, indem die Verkokung von der Spitze zum Boden und zu den Seiten des Kokskuchens fortschreitet, das restliche unvollständig verbrannte Verkokungsgas in einer seitlichen, mit Backsteinen beschickten Verbrennungskammer bei einer Temperatur von mindestens 1600°F verbrannt wird, und das Abgas in einen Abgasschacht bei einem Unterdruck zwischen 3,8 und 4,3 mm Wassersäule abgezogen wird.

Die WO 2006128612 A1 beschreibt eine Vorrichtung zur Verbrennung von Verkokungsgas in einer Verkokungskammer eines Koksofens vom "Non-Recovery"-Typ oder "Heat-Recovery"-Typ, wobei in der Decke jeder Ofenkammer eine Vielzahl von Eintrittsöffnungen für Primärluft derart angeordnet werden, dass das während der Verkokung entstehende Verkokungsgas gleichmäßig mit der gewünschten Menge Primärluft für die Teilverbrennung des Verkokungsgases in Kontakt gebracht wird, und diese Eintrittsöffnungen für Primärluft oberhalb des Ofens für jede Ofenkammer separat durch ein Luft-Zuführungssystem zusammengefasst werden, und die Luft-Zuführungssysteme der einzelnen Ofenkammern an ein für viele Ofenkammern gemeinsames Luft-Zuführungssystem angeschlossen werden, und zwischen dem gemeinsamen Luft-Zuführungssystem und den Luftzuführungen der einzelnen Ofenkammern je ein Steuerorgan zur Veränderung der Primärluft-Menge über der Garungszeit vorgesehen wird.

Die DE 3701875 A1 beschreibt ein Verfahren zur Erzeugung von Koks in einem regeneratorlosen Koksofen mit einer Verkokungskammer, in der die Kohle mit einer zu einem Heizzug unterhalb der Verkokungskammer führenden Gasleitung erhitzt wird, während ein Unterdruck in der Verkokungskammer aufrechterhalten wird, und wobei Luft in die Verkokungskammer in einer solchen Menge eingeleitet wird, dass eine reduzierende Atmosphäre nicht nur in der Verkokungskammer, sondern auch im Heizzug aufrechterhalten wird, wobei weiter die noch brennbaren Stoffe enthaltenden heißen Verbrennungsgase aus dem Heizzug in eine Abgasbrennkammer geleitet werden, in welcher die brennbaren Stoffe mit Luftüberschuß bei einer Temperatur verbrannt werden, welche die Bildung von Stickoxiden aus in den Verbrennungsgasen enthaltenen Stickoxidbestandteilen auf ein Minimum verringert und anschließend eine Entschwefelung und Wärmerückgewinnung durchgeführt wird.

Auch der Druck in der Koksofenkammer ändert sich im Verlauf des Verkokungsprozesses. "Non- und Heat-Recovery"-Koksöfen operieren im Unterdruckbetrieb, woraus sich ein emissionsfreundliches Erscheinungsbild für diesen Ofentyp ableitet. Die Höhe des Unterdruckes in den Brennkammern wird dabei über ein Sauggebläse oder durch Ausnutzung des Naturzuges eines Kamins gewöhnlich so eingestellt, dass auch für die Verbrennung des in der Anfangsphase der Verkokung entweichenden, maximalen Rohgasvolumenstroms ein hinreichender Luftvolumenstrom zur Verfügung steht, um Ausflammverluste und Emissionen durch die Primärluftöffnungen und Ofentüren zu vermeiden. Hierbei können Unterdrücke in der Ofenkammer oberhalb des Kohlekuchens zwischen -10 Pa und -100 Pa gemessen werden.

Damit liegen Indikatoren vor, anhand deren eine periodische Entfernung der kohlenstoffhaltigen Beläge erfolgen kann. Es besteht deshalb die Aufgabe, anhand der Messwerte für Druck und Temperatur an geeigneten Stellen innerhalb der Koksofenkammer eine Entfernung von kohlenstoffhaltigen Belägen vorzunehmen. Die Entfernung der kohlenstoffhaltigen Beläge soll auf eine möglichst einfache Weise geschehen, um eine Entfernung dieser Beläge ohne Stilllegung der Koksofenkammer oder auch bei laufendem Betrieb durchführen zu können.

Die Erfindung löst diese Aufgabe durch ein Verfahren, in dem Druckluft in Abhängigkeit von mindestens einem Meßparameter periodisch in die Downcomer-Kanäle geleitet wird, so dass darin enthaltene Kohlenstoffablagerungen durch einen in den Downcomer-Kanal eingelassenen Druckluftstrahl entfernbar sind. Die Entfernung der Beläge geschieht dabei durch Verbrennung, indem die kohlenstoffhaltigen Beläge durch Reaktion mit den freien OH-Radikalen sowie dem Sauerstoff des eingelassenen Gases reagieren, und durch den Eintrittsimpuls der Druckluft ein zusätzlicher Absaug- und Reinigungseffekt erzielt wird. Die Eindüsung der Druckluft geschieht vorteilhaft durch die Inspektionsöffnungen der Downcomer-Kanäle, da diese leicht zugänglich sind und eine Nachrüstung leicht möglich ist.

Die Regelung der Lufteindüsung kann beispielhaft über eine Messung des Druckes an beliebigen Stellen der Koksofenkammer erfolgen. Die Regelung der Lufteindüsung kann aber auch beispielhaft über eine Messung der Temperatur an beliebigen Stellen der Koksofenkammer erfolgen. Die eingelassene Druckluft enthält den zur Verbrennung der Beläge notwendigen Sauerstoff. Zur Ausführung der Erfindung kann auch ein sauerstoffangereichertes Gas genutzt werden.

Durch die Erfindung können kohlenstoffhaltige Beläge während des Betriebes entfernt werden, ohne dass eine Betriebsunterbrechung oder Demontage einer Koksofenkammer erforderlich ist. Die Luft oder das sauerstoffhaltige Gas werden bei der gewünschten Ansteuerung durch die Messsignale oder nach Ablauf eines festgelegten Zeitintervalls in die Downcomer-Kanäle geleitet, so dass eine zeitweise Einleitung des sauerstoffhaltigen Gases erfolgt. Hierdurch wird eine teilweise Auskühlung der Downcomer-Kanäle, welche die übermäßige oder unkontrollierte Zufuhr sauerstoffhaltigen Gases zur Folge hat, mit einer möglichen Beschädigung der Koksofenkammer vermieden.

Beansprucht wird insbesondere ein Verfahren zur automatischen Entfernung von Kohlenstoffablagerungen aus den Strömungskanälen von "Non-Recovery" und "Heat-Recovery"-Koksöfen und deren kokskammerseitigen Eintrittsöffnungen des Downcomer-Querschnittes, wobei
- eine Koksofenbank, welche aus mehreren Koksofenkammern mit jeweils zwei seitlichen Koksofenkammerwänden und mit darin angeordneten "Downcomer"-Kanälen besteht, über eine Druckluftleitung mit Druckluft versorgt wird,
und welches dadurch gekennzeichnet ist, dass
- in mindestens eine Koksofenkammer ein Teilstrom der Druckluft abgezweigt wird, der in die "Downcomer"-Kanäle strömt, und der absperrbar ist, und
- die Druckluft über ein Rohrende in die "Downcomer"-Kanäle zugeführt wird, welches so angeordnet ist, dass die Luft auf die Stellen strömt, an denen sich erfahrungsgemäß die meisten Ablagerungen bilden, und
- dieser Teilstrom an Druckluft in Abhängigkeit von mindestens einem Meßparameter für Druck oder Temperatur in mindestens einen "Downcomer"-Kanal geleitet wird, so dass darin enthaltene Kohlenstoffablagerungen durch einen in den "Downcomer"-Kanal eingelassenen Druckluftstrahl entfernbar sind.

Bei dem Messparameter handelt es sich beispielhaft um einen Druckparameter, der an mindestens einer Stelle im Koksofen gemessen wird. Dieser wird dann in Bezug zu einem bereits bekannten Sollwert oder einem weiteren messbaren Druckwert gesetzt. In der Regel werden also ein oder zwei einzelne Druckparameter gemessen. Bei dem Druckparameter handelt es sich beispielhaft um einen Druckunterschied, der in den Brennkammern unterhalb und oberhalb des Kohle- oder Kokskuchens, also zwischen dem Primärheizraum und den Rauchgaskanälen unterhalb der Koksofenkammer, gemessen wird, und der Δp > 30 Pa zur Auslösung des Druckluftstrahles beträgt. Bei dem Druckparameter kann es sich auch um einen Druckunterschied handeln, der zwischen dem Gasraum der Koksofenkammer, dem Primärheizraum, und der Umgebungsatmosphäre gemessen wird, und der zur Auslösung des Druckluftstrahles -70 Pa < Δp < 40 Pa beträgt.

Setzen sich die Downcomer-Kanäle infolge der der Verstopfung stromaufwärts zu, so steigt die Druckdifferenz zwischen beiden Brennkammern, d.h. zwischen Primärheizraum und Sekundärheizraum, erfahrungsgemäß auf Werte ΔP > 30 Pa. Dem Sekundärverbrennungsprozess in den Sekundärluftsohlen fehlt infolge der Verstopfung das teilverbrannte Verkokungsgas. Infolgedessen wird damit die Kohle ausschließlich von oben, d.h. durch die Wärme aus dem Primärverbrennungsprozess beheizt. Dies wiederum führt zu einer verminderten Prozessgeschwindigkeit, die erfahrungsgemäß eine Reduzierung der Ofenleistung ergibt.

Bei dem Messparameter kann es sich auch um einen Temperaturparameter handeln, der an mindestens einer Stelle im Koksofen gemessen wird. Bei dem Temperaturparameter handelt es sich beispielhaft um die Temperatur, die im Gasraum über dem Kokskuchen gemessen wird, und die zur Auslösung des Druckluftstrahles T = 1100 °C unterschreitet.

Bei der Druckluft handelt es sich beispielhaft um normale, nicht getrocknete Luft mit atmosphärischer Zusammensetzung. Diese wird durch einen Kompressor auf ein Druckniveau gebracht, welches zur Einlassung oder Eindüsung in die Inspektionsöffnungen der Downcomer-Kanäle geeignet ist. Bei der Druckluft kann es sich aber auch Luft handeln, die sauerstoffangereichert ist. Die Druckluft kann in einer weiteren Ausführungsform der Erfindung auch durch reinen Sauerstoff ersetzt werden. Die Druckluft kann zur besseren Ausführbarkeit auch mit verbrennungsinerten Gasen angereichert sein. So kann die Druckluft auch stickstoff- oder mit Abgas angereichert sein, das aus dem Verbrennungsprozess abgezweigt wird. Bei dem Medium kann es sich auch um reinen Sauerstoff handeln. Schließlich kann es sich bei Druckluft um Luft handeln, die mit dem teilweise oder vollständig verbrannten Abgas der Koksofenkammer vermischt ist. Das Medium wird typischerweise bei einem Überdruck von 0,1 bis 10 bar zugeführt. Das Medium kann getrocknet oder ungetrocknet sein.

Zur Auslösung des Druckluftstrahles werden die Messwerte der Sonden vorteilhaft durch eine digitale Rechnereinrichtung erfasst, ausgewertet und gesteuert. Zur Ausführung der Erfindung ist es bereits ausreichend, wenn der Messwert mindestens eines Druck- oder Temperaturmessparameters durch eine digitale Rechnereinrichtung erfasst, ausgewertet und gesteuert wird, so dass diese Rechnereinheit in Abhängigkeit der Messwerte mindestens einen Druckluftstrahl in eine Nebenrohrleitung und die dazugehörigen Downcomer-Kanäle einschaltet. Die Rechnereinheit kann aber auch in Abhängigkeit der Messwerte mindestens einen Druckluftstrahl in eine Verteilerleitung und den dazugehörigen Downcomer-Kanal einschalten.

In einer weiteren Ausführungsform der Erfindung werden mehrere Messwerte bestimmt, so dass beispielsweise eine kombinierte Messung und Auswertung von Temperatur- und Druckmesssignalen vorgenommen wird, und der Teilstrom an Druckluft periodisch in Abhängigkeit von mindestens zwei Meßparametern in mindestens einen "Downcomer-Kanal" geleitet wird.

Es ist auch möglich, die periodische Einleitung von Druckluft durch empirische Werte vorzunehmen, so dass es sich bei dem Messwert um eine empirische Bestimmung eines Zeitintervalls handelt, nach welchem dieser Teilstrom an Druckluft periodisch in mindestens einen "Downcomer"-Kanal geleitet wird. Die empirischen Werte können dabei beispielhaft durch vorhergehende Messungen von mindestens einem Meßparameter eines Druck- oder Temperaturwertes bestimmt werden.

Die Entfernung der kohlenstoffhaltigen Beläge kann an jedem Downcomer-Kanal aller Koksofenkammern ausgeführt werden. Die Entfernung der kohlenstoffhaltigen Beläge kann aber auch an einem einzelnen Downcomer aller Koksofenkammern, an jedem Downcomer nur einer Koksofenbank oder an einem einzelnen Downcomer nur einer Koksofenbank ausgeführt werden. Es ist auch denkbar, die Entfernung der kohlenstoffhaltigen Beläge an weiteren Stellen der Koksofenkammer durchzuführen, obwohl die Downcomer-Kanäle der bevorzugte Ausführungsort der Erfindung sind. Hierzu wird ein Rohrende so angeordnet, dass der Teilstrom an Druckluft in Abhängigkeit von mindestens einem Meßparameter eines Druck- oder Temperaturwertes auf die Stellen strömt, an denen sich erfahrungsgemäß die meisten Ablagerungen bilden.

Eine Entfernung der kohlenstoffhaltigen Beläge mittels eines aus dem Stand der Technik geregelten, erhöhten Primärvolumenstroms in die Koksofenkammer erbringt auf Grund der großen geometrischen Distanz von mehreren Metern zu den betroffenen, stromabwärts gelegenen Downcomer-Kanälen keinerlei Reinigungswirkung. Dies ist bei Öfen mit Deckenluftzufuhr dadurch begründet, dass der durch die Ofendecke einströmende Primärluftstrom zunächst in Normalenrichtung in die Koksofenkammer eintritt, wobei dieser vertikal nach unten gerichtet ist, und dort auf die Kohlekuchenoberfläche auftritt. Die Sauerstoffkonzentration nimmt auf diesem Weg nach unten infolge von Verbrennungsvorgängen kontinuierlich ab, und die an der Kohlekuchenoberfläche anliegende Restsauerstoffkonzentration ist schließlich so gering, dass sie auf Grund der großen Distanz zu den Downcomer-Kanälen dort keinerlei verbrennungstechnische und ablagerungsentfernende Wirkung mehr zur Folge hat.

Eine überproportionale Erhöhung der Primärluftmenge ist nicht möglich, da das Verfahren eine Unterstöchiometrie in der Brennkammer oberhalb der Charge voraussetzt.

Beansprucht wird auch eine Vorrichtung, mit der sich das erfindungsgemäße Verfahren ausführen lässt. Beansprucht wird insbesondere eine Vorrichtung in einer Koksofenkammer zur automatischen Entfernung von Kohlenstoffablagerungen aus den Strömungskanälen von "Non-Recovery" und "Heat-Recovery"-Koksöfen oder deren kokskammerseitigen Eintrittsöffnungen des Downcomer-Querschnittes, umfassend
- eine Druckluftleitung, die auf der Ofendecke einer Koksofenbank, welche aus mehreren Koksofenkammern aufgebaut ist, installiert ist, und diese die Koksofenkammern in Querrichtung miteinander verbindet,
und welche dadurch gekennzeichnet ist, dass
- die Druckluftleitung auf der Decke mindestens einen Abzweig besitzt, welcher im weiteren Strömungsverlauf in eine Rohrleitung mündet, welche in einem "Downcomer"-Kanal einer Koksofenkammer ein Rohrende zur Auslassung von Druckluft besitzt, und
- das Rohrende so angeordnet ist, dass die Luft auf die Stellen strömt, an denen sich erfahrungsgemäß die meisten Ablagerungen bilden, und an mindestens einer Stelle im Koksofen mindestens eine Messsonde für Druck oder Temperatur angeordnet ist, und
- diese eine digitale Rechnereinrichtung besitzt, welche die Regelwerte mindestens eines Drucksensors oder eines Thermoelementes erfasst, auswertet und steuert, so dass durch diese Rechnereinrichtung in Abhängigkeit der Messwerte mindestens ein Druckluftstrahl in der Nebenrohrleitung und in mindestens einem Downcomer-Kanal eingeschaltet wird.

Die Druckluft kann beispielsweise durch einen Kompressor bereitgestellt werden. Diese wird dann in eine Druckluftleitung eingespeist. Diese verläuft in vorteilhafter Weise quer entlang der Koksofenbank. Dies kann auf Höhe der Decke der Koksofenbank geschehen. Dies kann aber auch beispielhaft auf Höhe der Bedienungsbühnen der Ofensohle, die sich seitlich an den Ofenstirnseiten der Koksofenbank befinden, geschehen. Des Weiteren ist eine Anordnung dieser Leitung auf Höhe des Bodengrundniveaus denkbar.

Die Rohrleitung auf der Decke der Koksofenbank besitzt dann mindestens einen Abzweig, welcher im weiteren Strömungsverlauf in eine Nebenrohrleitung mündet, die in Ofenlängsrichtung von der Maschinenseite zur Koksseite des Ofens verläuft, und von der im weiteren Strömungsverlauf mindestens eine weitere Rohrleitung abzweigt, welche in ein Rohrende mündet, welches in einem Downcomer-Kanal zur Auslassung von Druckluft geeignet ist.

Hierzu kann jede Koksofenkammer einer Koksofenbank an der querverlaufenen Druckluftleitung einen Abzweig besitzen, der dann in einem weiteren Abzweig in jeden Downcomer der Koksofenkammerwand führt. Es ist aber auch möglich, dass nur eine Koksofenkammer einen Abzweig besitzt, von dem aus dann in weiteren Abzweigen alle Downcomer-Kanäle mit Druckluft beaufschlagt werden. Es ist weiterhin auch möglich, dass jede Koksofenkammer an der querverlaufenden Druckluftleitung einen Abzweig besitzt, wobei nur ein Downcomer-Kanal durch einen weiteren Abzweig mit Druckluft beaufschlagt wird. Es ist schließlich möglich, dass nur eine Rohrleitung auf der Decke der Koksofenbank einen Abzweig besitzt, welcher im weiteren Strömungsverlauf in eine Nebenrohrleitung mündet, die in Ofenlängsrichtung von der Maschinenseite zur Koksseite des Ofens verläuft, und von der im weiteren Strömungsverlauf nur eine weitere Verteilerleitung abzweigt, welche in ein Rohrende mündet, welches in einem Downcomer-Kanal zur Auslassung von Druckluft geeignet ist.

Es ist in einer einfachen Ausführungsform auch denkbar, dass in jeden "Downcomer"-Kanal jeder Koksofenkammer einer Koksofenkammerbank ein Rohrende mündet, welches zur Auslassung von Druckluft geeignet ist.

In einer Ausführungsform des Verfahrens besitzt mindestens ein Rohrende einen Düsenaufsatz, welcher zur Ausdüsung eines Druckluftstrahles geeignet ist. Die Austrittsöffnungen der Düse können dabei in einer vorteilhaften Ausführung so gestaltet sein, dass die Druckluft in einem Winkel zur Vertikalen von größer 0° in den Querschnitt der Downcomer-Öffnung strömt. In einer weiteren Ausführungsform des Verfahrens ist mindestens ein Rohrende horizontal abgewinkelt. Dadurch kann das Rohrende, welches zur Ausdüsung eines Druckluftstrahles geeignet ist, auf die Eintrittsöffnung des Downcomer-Querschnittes gerichtet werden. Die Austrittöffnung des Rohrendes kann in einer weiteren Ausführungsform schlitzförmig, rechteckig, ringförmig oder kreisringförmig gestaltet sein sowie die Kombination mehrerer dieser Austrittsformen einschließen. Die genannten Rohrformen oder Ausführungsformen für Rohrenden können an nur einem Rohr oder Rohrende, aber auch an beliebig vielen ausgeführt werden.

Das Rohrende besteht auf Grund der hohen der Temperaturen im Downcomer-Kanal zwischen 950 und 1500 °C aus einem beliebigen Material, welches gegen Hitze beständig sein sollte. In beispielhaften Ausführungsformen besteht das Rohrende aus einem hitzebeständigen Eisenwerkstoff, aus einem keramischen Silikawerkstoff, oder aus einem Korundwerkstoff. Vorzugsweise wird dieses Material aus der Gruppe der warmfesten Stähle oder der feuerfesten keramischen Baustoffe ausgesucht. Aus dieser Baustoffgruppe wiederum sind beispielsweise besonders tonerdereiche Materialien sowie Hochbrandmaterialien auf Basis des Rohstoffes Korund mit Al₂O₃-Anteilen zwischen 50-94%, SiO₂-Anteilen zwischen 1,5-46%, Cr₂O₃-Anteilen kleiner 29 %, Fe₂O₃-Anteilen kleiner 1,6% und ZrO₂-Anteilen kleiner 32% geeignet, da sie durch eine hohe Anwendungstemperatur von mehr als 1500°C gekennzeichnet sind.

Zur Regelung des Druckluftstromes in eine Nebenrohrleitung besitzt die Nebenrohrleitung eine automatisierbare Hahnkonstruktion als Absperrvorrichtung zur Regelung des Druckluftflusses. Die Nebenrohrleitung kann auch eine automatisierbare Schieberkonstruktion zur Regelung des Druckluftflusses besitzen. Dies gilt auch für die Rohrenden mit oder ohne Düsenaufsatz. Zur Regelung des Druckluftstrahles kann mindestens ein Rohrende mit oder ohne Düsenaufsatz eine automatisierbare Hahnkonstruktion zur Regelung des Druckluftflusses besitzen. Es ist aber auch möglich, zur Regelung des Druckluftflusses eine automatisierbare Schieberkonstruktion zu wählen. Schließlich kann die Regelung der Druckluft durch eine beliebige Regelvorrichtung ausgeführt werden.

Alle Absperrvorrichtungen können zur Regelung des Druckluftflusses beispielhaft elektrisch, hydraulisch oder durch Druckluft betätigt werden. In einer Ausführungsform der Erfindung wird die Konstruktion zur Regelung des Druckluftflusses hydraulisch betätigt. In einer weiteren Ausführungsform der Erfindung wird die Konstruktion zur Regelung des Druckluftflusses elektrisch betätigt. In einer weiteren Ausführungsform der Erfindung wird die Konstruktion zur Regelung des Druckluftflusses pneumatisch betätigt.

Die Anordnung der Messwertsonden auf der Ofendecke erfolgt beispielhaft so, dass zur Druckmessung Druckmesssonden durch die Inspektionsverschlüsse in die Downcomer-Kanäle der von Kohlenstoffbelägen zu befreienden Koksofenkammer geführt werden. Diese können aber auch in den Primärheizraum geführt werden. So werden beispielhaft zur Druckmessung 1 bis 24 Druckmesssonden durch die Inspektionsverschlüsse in die "Downcomer"-Kanäle der von Kohlenstoffbelägen zu befreienden Koksofenkammer geführt. Es können auch zur Druckmessung 1 bis 3 Druckmesssonden durch die Ofendecke der von Kohlenstoffbelägen zu befreienden Koksofenkammer geführt werden. Es auch möglich, dass zur Druckmessung 1 bis 2 Druckmesssonden seitlich durch die Ofenkammertüren der von Kohlenstoffbelägen zu befreienden Koksofenkammer geführt werden. Schließlich ist es auch möglich, dass zur Druckmessung 1 bis 4 Druckmesssonden seitlich durch die Stirnwände der Ofenkammer, welche sich über der Koksofenkammertür befinden und den Primärheizraum abdecken, geführt werden. Auf diese Weise steht ein Vergleichssignal zur Verfügung, welches einen Temperatur- oder Druckmesswert an einer Stelle nimmt, welche im oberen Teil der Koksofenkammer angeordnet ist und mit dem Primärheizraum in Verbindung steht.

Die Anordnung der weiteren Messwertsonden erfolgt beispielhaft so, dass zur Druckmessung 1 bis 4 Druckmesssonden durch die seitlichen Stirnwände der Ofenkammer, welche sich unter der Koksofenkammertür befinden und den Sekundärheizraum oder in die Sekundärluftsohle abdecken, geführt werden. Zur Druckmessung können auch 1 bis 8 Druckmesssonden durch die seitlichen Stirnwände der Ofenkammer, welche sich unter der Koksofenkammertür befinden und den Sekundärheizraum oder in die Sekundärluftsohle abdecken, geführt werden. Es ist es auch möglich, dass in den Verbindungskanälen zwischen dem Sekundärheizraum unterhalb der Kohlekuchens und der Abgassammelleitung der Koksofenbank, zur Druckmessung 1 bis 2 Druckmesssonden angeordnet werden. Es ist weiterhin möglich, dass in der Abgassammelleitung, welche quer zur Koksbank auf der Ofendecke verläuft, zur Druckmessung 1 bis 2 Druckmesssonden angeordnet werden. Es ist auch möglich, dass in der Abgassammelleitung, welche quer zur Koksbank unterhalb der Koksofenkammertüren verläuft, zur Druckmessung 1 bis 2 Druckmesssonden angeordnet werden. Die genannten Zahlen sind als beispielhafte Ausführungsform zu verstehen, wobei auch einzelne oder mehrere Druckmesssonden an verschiedenen Positionen angeordnet sein können.

So können die Druckmessungen auch in Verbindungskanälen zwischen der sekundären Beheizungskammer unterhalb des Kohlekuchens und dem Abgassammelkanal der Koksofenbank erfolgen. In einer Ausführungsform erfolgt in diesen Kanälen eine aufwärts gerichtete Strömung, da die Abgassammelleitung auf der Ofendecke angeordnet ist. Sie werden in dieser Form deshalb auch als "Uptake"-Kanäle bezeichnet und sind ebenfalls in den seitlichen Koksofenwänden, jedoch zwischen den Downcomer-Kanälen angeordnet. Durch die Anordnung von Druckmesssonden im Gasfluss vor und hinter den durchflußhindernden Ablagerungen lässt sich dann eine Druckdifferenz als Messwert ermitteln.

Als Steuersignal können auch Temperaturmesswerte ermittelt werden. Hierzu wird beispielhaft bei der von Kohlenstoffbelägen zu befreienden Koksofenkammer im Gewölbescheitel der von Kohlenstoffbelägen zu befreienden Koksofenkammer mindestens ein Thermoelement durch die Ofendecke oder durch die seitlichen Ofentüren oberhalb des Kokskuchens geführt. Weiterhin kann durch die Koksofenkammertüren der von Kohlenstoffbelägen zu befreienden Koksofenkammer mindestens ein Thermoelement in den Gasraum oberhalb des Kokskuchens geführt werden. Es ist auch möglich, dass bei der von Kohlenstoffbelägen zu befreienden Koksofenkammer mindestens ein Thermoelement durch die Inspektionsverschlüsse in die Downcomer-Kanäle geführt wird. Da für die Erfassung der Temperaturmesswerte keine Temperaturdifferenz zu einem anderen Messwert benötigt wird, ist die Installation von Temperaturmesssonden an nur einer dieser Positionen möglich. Selbstverständlich können jedoch mehrere Temperaturmesssonden vorgesehen sein. Auch an weiteren Stellen, die hierfür denkbar sind, kann eine Installation vorgesehen sein. Dies kann beispielsweise auch an den Koksofenkammerwänden erfolgen, wenn auch diese Vorgehensweise weniger vorteilhaft ist. Denkbar ist auch eine kombinierte Messung und Auswertung von Temperatur- und Druckmesssignalen.

Das Steuersignal kann auch nach einem festgelegten Zeitintervall ohne Messwerterfassung gegeben werden. So ist es vor allem in der ersten Phase der Verkokung, die auf Grund der Unterstöchiometrie in der oberen Ofenkammer durch besonders hohe Raten an Kohlenstoffablagerungen geprägt ist, verfahrenstechnisch von Vorteil, Druckluft in kürzeren Zeitabständen, z.B. 10 h, 24 h und 36 Stunden nach dem Füllvorgang, in die Downcomer einzudüsen und damit der Prozessverzögerung präventiv entgegen zu wirken.

In einer Ausführungsform wird dabei nur dasjenige Regelorgan je Ofenwand betätigt, dass die von der Maschinen- zur Koksseite verlaufende Nebenrohrleitung von der Hauptdruckleitung absperrt. In diesem Falle befinden sich die Absperrarmaturen in der Nebenrohrleitung im geöffneten Zustand und werden automatisch mit Druckluft versorgt, sobald die Auswerteeinheit das Signal zum Öffnen gibt. In diesem Falle kann die Luftmenge pro Downcomer-Kanal manuell durch die Hahnstellung oder ein Kalibrierorgan eingestellt werden.

In einer weiteren Ausführungsform der Erfindung besitzt mindestens eine Verteilerleitung, welche von der Nebenrohrleitung abzweigt, oder ein Rohrende mit oder ohne Düsenaufsatz eine automatisierbare Hahnkonstruktion zur Regelung des Druckluftflusses. In einer weiteren Ausführungsform der Erfindung besitzt mindestens eine Verteilerleitung, welche von der Nebenrohrleitung abzweigt, oder ein Rohrende mit oder ohne Düsenaufsatz eine automatisierbare Schieberkonstruktion zur Regelung des Druckluftflusses.

Die Erfindung besitzt den Vorteil, dass kohlenstoffhaltige Beläge, welche sich bei Koksofenkammern vom Typ "Heat-Recovery" oder "Non-Recovery" während des Betriebes durch Pyrolyse von kohlenstoffhaltigen Verkokungsgasen bilden, ohne weitere Betriebsunterbrechung auf nichtmechanische Art entfernt werden können. Dadurch ist ein störungsfreier Betrieb der Koksofenkammern möglich. Eine übermäßige Zufuhr von Luft und eine daraus resultierende Auskühlung der Downcomer-Kanäle wird durch die durch Messwerte gesteuerte Zufuhr vermieden.

Die Erfindung wird anhand von vier Zeichnungen genauer erläutert, wobei das erfindungsgemäße Verfahren nicht auf diese Ausführungsformen beschränkt ist. FIG. 1 zeigt eine Koksofenkammer mit seitlich angeordneten Downcomer-Kanälen, welche in frontaler Ansicht schräg seitlich von oben zu sehen ist. FIG. 2 zeigt eine Koksofenbank mit einer Anordnung von zwei Koksofenkammern, welche in frontaler Ansicht schräg seitlich von oben zu sehen ist. FIG. 3 zeigt eine Koksofenkammer in seitlicher Ansicht, welche eine Abgassammelleitung unterhalb der Koksofenkammertüren besitzt. FIG. 4 zeigt eine Koksofenkammer in seitlicher Ansicht, welche eine Abgassammelleitung auf der Decke der Koksofenkammer besitzt.

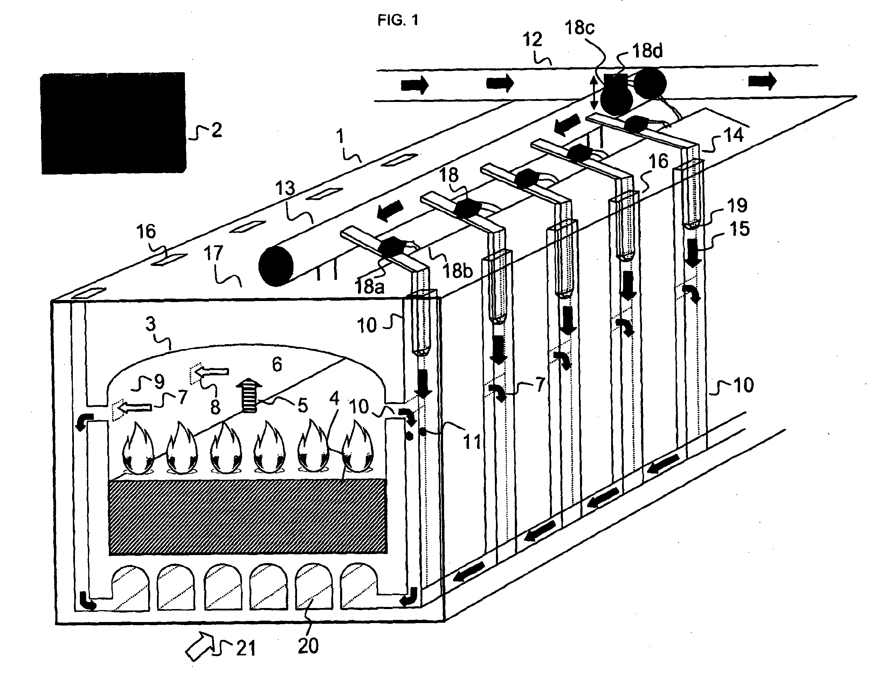

FIG. 1 zeigt eine Koksofenkammer (**1**), an der die Koksofenkammertüren (**2**) entfernt wurden, so dass die Koksofenkammeröffnung (**3**) zu sehen ist. Zu sehen ist in der Koksofenkammer (**1**) der Kohlekuchen (**4**), welcher verkokt wird und dadurch Verkokungsgas (**5**) entwickelt. Das Verkokungsgas (**5**) strömt in den Primärheizraum (**6**), wo es mit einer unterstöchiometrischen Menge an Luft vermischt und teilweise verbrannt wird. Das teilverbrannte Verkokungsgas (**7**) strömt über seitliche Öffnungen (**8**) in der Koksofenkammerwand (**9**) in die Downcomer-Kanäle (**10**), wo sich bedingt durch das Temperaturniveau und der unterstöchiometrisch ablaufenden Pyrolyse kohlenstoffhaltige Ablagerungen (**11**) bilden. Aus einer quer zur Koksofenkammer (**1**) verlaufenden Druckluftleitung (**12**) zweigt eine Nebenrohrleitung (**13**) ab, welche längs zur Koksofenkammer (**1**) verläuft. Von dieser wiederum zweigen Rohrleitungen (**14**) ab, welche die einzelnen Downcomer-Kanäle (**10**) mit Druckluft (**15**) versorgen. Diese Rohrleitungen (**14**) führen durch die Inspektionsöffnungen (**16**) der Downcomer-Kanäle (**10**) in der Decke (**17**) der Koksofenkammer (**1**). Die Zufuhr von Druckluft (**15**) wird durch eine Absperrvorrichtung (**18**) geregelt, welche hier ein Schieber (**18a**) ist. Der Schieber wird durch eine elektrische Steuerungseinrichtung (**18b**) angetrieben, welche mit einer Rechnereinheit verbunden ist. Nach Öffnung des Schiebers (**18a**) strömt über das Rohrende (**19**) Luft (**15**) oder ein sauerstoffhaltiges Gas in die Downcomer-Kanäle (**10**). Die Druckluftleitung (**12**) und die Nebenrohrleitung (**13**) sind ebenfalls durch eine regelbare Absperrarmatur (**18c**) und Steuerungseinrichtung (**18d**) voneinander getrennt. Das Rohrende (**19**) kann im Downcomer-Kanal (**10**) in beliebiger Höhe angeordnet sein, ist jedoch bevorzugt so angeordnet, dass die Luft (**15**) auf die Stellen (**11**) strömt, an denen sich erfahrungsgemäß die meisten Ablagerungen bilden. Durch die zeitweise und dosierte Zufuhr von Luft **(15)** verbrennen die kohlenstoffhaltigen Ablagerungen (**11**) im Downcomer-Kanal (**10**). Das teilverbrannte Verkokungsgas (**7**) strömt im weiteren Verlauf in die Sekundärheizräume (**20**), in denen es durch die Zufuhr weiterer Sekundärluft (**21**) vollständig verbrannt wird.

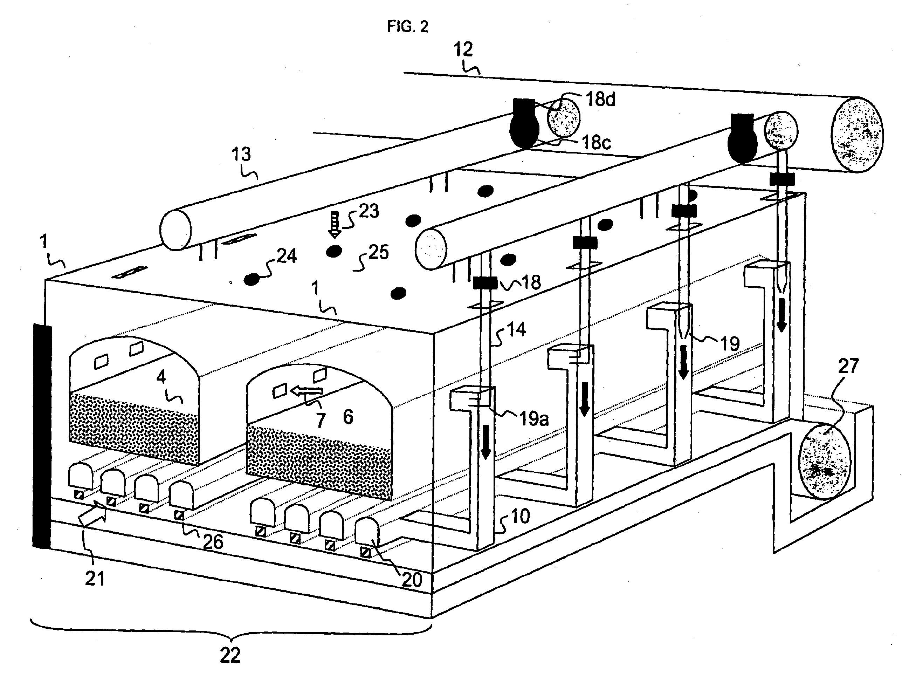

FIG. 2 zeigt eine Anordnung von zwei Koksofenkammern (**1**) in einer Koksofenbank (**22**), über welchen eine quer zu den Koksofenkammern (**1**) verlaufende zentrale Druckluftleitung (**12**) angeordnet ist. Von dieser zentralen Druckluftleitung (**12**) aus zweigt eine Nebenrohrleitung (**13**) ab, welche längs zu den Koksofenkammern (**1**) verläuft. Von dieser Nebenrohrleitung (**13**) zweigen weitere Verteilerleitungen (**14**) ab, welche die einzelnen Rohrleitungen (**14**) mit Druckluft (**15**) versorgen. Die Verteilerleitungen (**14**) besitzen Rohrenden (**19**), welche in den Downcomer-Kanälen (**10**) enden, wo die sauerstoffhaltige Druckluft (**15**) zur Verbrennung der kohlenstoffhaltigen Beläge (**11**) hingeführt wird. Zwei dieser Rohrenden (**19**) sind horizontal abgewinkelt (**19a**). Die Verteilerleitungen (**14**) werden durch Absperrvorrichtungen (**18**) abgesperrt, wodurch eine Regelung der Luftzufuhr in diese Verteilerleitungen (**14**) möglich ist. In dem Primärheizraum (**6**) werden die Verkokungsgase **(5),** welche aus dem Kokskuchen (**4**) strömen, mit einer unterstöchiometrischen Menge an Luft, der Primärluft (**23**), verbrannt. Die hierzu nötige Verbrennungsluft (**23**) wird über Primärluftöffnungen (**24**) in der Koksofenkammerdecke (**25**) zugeführt. Die Downcomer-Kanäle (**10**) nehmen das teilverbrannte Verkokungsgas (**7**) aus dem Primärheizraum (**6**) auf und führen dies in die Sekundärheizräume (**20**), welche über die Sekundärluftsohlen (**26**) mit Luft (**21**) versorgt werden. Das Abgas aus den Sekundärheizräumen (**20**) wird in die zentrale Abgasleitung (**27**) geführt.

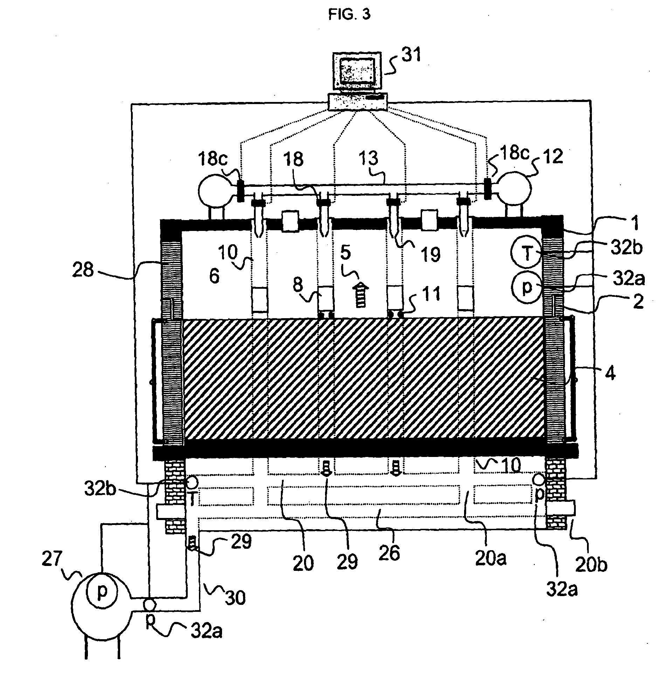

FIG. 3 zeigt eine Koksofenkammer (**1**) in seitlicher Ansicht. Zu sehen sind die frontalen Koksofenkammertüren (**2**), welche in einer Ausführungsform gezeigt sind, in der die Koksofenkammertüren (**2**) passgenau in die darübergelegenen Koksofenkammerwände (**28**) eingesetzt werden. Aus dem Kohle- oder Kokskuchen (**4**) strömt das Verkokungsgas (**5**) in den Primärheizraum (**6**), von wo aus es über Öffnungen (**8**) in die Downcomer-Kanäle (**10**) geleitet wird. Von dort aus strömt es in die Sekundärheizräume (**20**), in denen es über Öffnungen (**20a,20b**) mit aus den Sekundärluftsohlen (**26**) kommender Sekundärluft verbrannt wird. Das vollständig verbrannte Verkokungsgas (**29**) wird über eine Sammelleitung (**30**) in eine zentrale Abgasleitung (**27**) geleitet, in der das Abgas (**29**) gesammelt und in "Heat-Recovery"-Öfen zur Wärmerückgewinnung verwendet wird. Die Downcomer-Kanäle (**10**) können sich mit kohlenstoffhaltigen Belägen (**11**) zusetzen. Diese werden deshalb über eine zentrale Druckluftleitung (**12**) und eine Nebenrohrleitung (**13**) mit Druckluft versorgt, die über Verteilerleitungen (**14**) mit Rohrenden (**19**) in die Downcomer-Kanäle (**10**) verteilt wird. Sowohl die Verteilerleitung (**14**) als auch die Rohrenden (**19**) sind über Ventile (**18c,18**) absperrbar. Die Ventile (**18**) wiederum sind mit einer digitalen Rechnereinrichtung (**31**) verbunden, die über Steuersignale aus Sensoren (**32**) gesteuert wird. Die Sensoren (**32**) befinden sich im Primärheizraum (**6**) der Koksofenkammer (1), wo ein Druckmesssensor (**32a**) und ein Thermoelement (**32b**) angeordnet sind, im Sekundärheizraum (**20**) unter der Koksofenkammer (**1**), wo ebenfalls je ein Drucksensor- (**32a**) und ein Thermoelement (**32b**) angeordnet sind, und in der zentralen Abgasleitung (**27**), wo jeweils ein Drucksensor (**32a**) in der Abgassammelleitung (**30**) und in der zentralen Abgasleitung (**27**) angeordnet sind. Die Messwerte der Sensoren werden von der digitalen Rechnereinheit (**31**) erfasst, die daraufhin die Ventile (**18**) der Druckluftleitungen in die Downcomer-Kanäle (**10**) ansteuert. Durch das Zuleiten von Druckluft werden die kohlenstoffhaltigen Beläge (**11**) in den Downcomer-Kanälen (**10**) entfernt. Zu Vergleichszwecken sind in der Skizze zwei Downcomer-Kanäle mit kohlenstoffhaltigen Belägen (**11**) gezeigt.

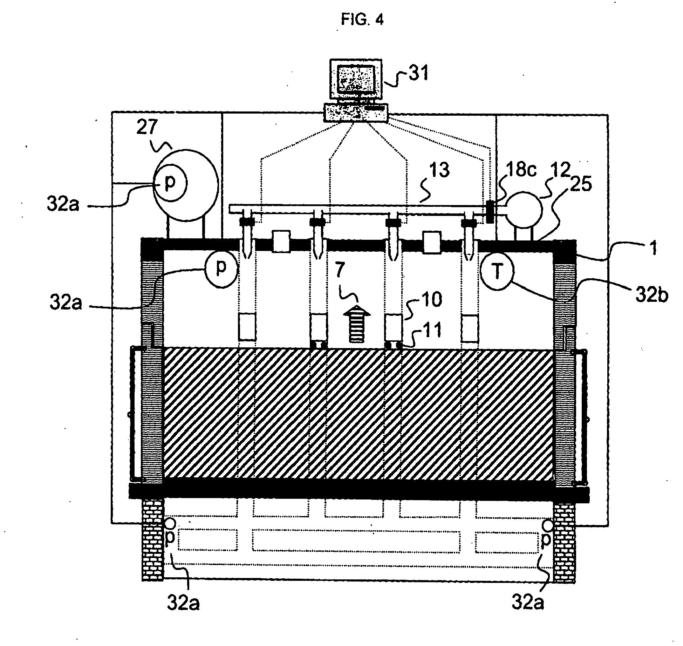

FIG. 4 zeigt die gleiche Koksofenkammer (**1**) in seitlicher Ansicht, jedoch mit einer Abgassammelleitung (**27**) auf der Decke (**25**) der Koksofenkammer. Diese besitzt auf der Decke **(25)** ebenfalls eine zentrale Druckluftleitung (**12**), von der aus eine Nebenrohrleitung (**13**) abzweigt, aus der die einzelnen Verteilerleitungen (**14**) mit den Rohrenden (**19**) in die Downcomer-Kanäle (**10**) mit Verteilerleitung (**14**) in die Downcomer-Kanäle (**10**) abzweigen. In der zentralen Abgasleitung **(27),** die hier auf der Decke (**17**) der Koksofenkammer (**1**) installiert ist, ist ein Druckmesssensor (**32a**) angeordnet. Im Sekundärheizraum sind zwei Druckmesssensoren (**32a**) und im Primärheizraum je ein Druckmesssensor (**32a**) und ein Temperaturmesssensor (**32b**) angeordnet. An zwei Downcomer-Kanälen (**10**) sind hier ebenfalls kohlenstoffhaltige Beläge (**11**) zu sehen, welche durch das Zuleiten von Druckluft (**12**) entfernt werden.

### Bezugszeichenliste

- 1: Koksofenkammer
- 2: Frontale Koksofenkammertüren
- 3: Kokskammeröffnung
- 4: Koks- oder Kohlekuchen
- 5: Verkokungsgas
- 6: Primärheizraum
- 7: Teilverbranntes Verkokungsgas
- 8: Öffnungen der "Downcomer"-Kanäle
- 9: Koksofenkammerwand
- 10: "Downcomer"-Kanäle
- 11: Kohlenstoffhaltige Ablagerungen
- 12: Zentrale Druckluftleitung
- 13: Nebenrohrleitungen
- 14: Rohrleitung als Verteilerleitung
- 15: Druckluft
- 16: Inspektionsöffnungen
- 17: Decke der Koksofenkammer
- 18: Absperrvorrichtung
- 18a: Schieber
- 18b: Elektrische Steuerungseinrichtung
- 18c: Hahn
- 18d: Elektrische Steuerungseinrichtung
- 19: Rohrende der Druckluftleitungen
- 19a: Horizontal abgewinkeltes Rohrende
- 20: Sekundärheizräume
- 21: Sekundärluft
- 22: Koksofenbank
- 23: Primärluft
- 24: Primärluftöffnungen
- 25: Decke der Koksofenkammer
- 26: Sekundärluftsohlen
- 27: Zentrale Abgasleitung
- 28: Koksofenkammerwände
- 29: Abgas
- 30: Abgassammelleitung
- 31: Digitale Rechnereinheit
- 32: Messsensor
- 32a: Druckmesssensor
- 32b: Temperaturmesssensor

## Patentansprüche

1. Verfahren zur automatischen Entfernung von Kohlenstoffablagerungen (11) aus den Strömungskanälen (10) von "Non-Recovery" und "Heat-Recovery"-Koksöfen und deren kokskammerseitigen Eintrittsöffnungen des Downcomer Querschnittes (10), wobei
• eine Koksofenbank (22), welche aus mehreren Koksofenkammern (1) mit jeweils zwei seitlichen Koksofenkammerwänden (9) und mit darin angeordneten "Downcomer"-Kanälen (10) besteht, über eine Druckluftleitung (19) mit Druckluft (15) versorgt wird,
**dadurch gekennzeichnet, dass**
• in mindestens eine Koksofenkammer (1) ein Teilstrom der Druckluft (15) abgezweigt wird, der in die "Downcomer"-Kanäle (10) strömt, und der absperrbar ist, und
• die Druckluft (15) über ein Rohrende (19) in die "Downcomer"-Kanäle (10) gegeben wird, welches so angeordnet ist, dass die Luft (15) auf die Stellen strömt, an denen sich erfahrungsgemäß die meisten Ablagerungen (11) bilden, und
• dieser Teilstrom an Druckluft (15) periodisch in Abhängigkeit von mindestens einem Meßparameter (32) für Druck (32a) oder Temperatur (32b) in mindestens einen "Downcomer-Kanal" (10) geleitet wird, so dass darin enthaltene Kohlenstoffablagerungen (11) durch einen in den "Downcomer"-Kanal (10) eingelassenen Druckluftstrahl (15) entfernbar sind.

2. Verfahren nach Anspruch 1, **dadurch gekennzeichnet, dass** es sich bei dem Messparameter um einen Druckparameter handelt, der an mindestens einer Stelle im Koksofen (1) gemessen wird.

3. Verfahren nach Anspruch 2, **dadurch gekennzeichnet, dass** es sich bei dem Druckparameter um einen Druckunterschied handelt, der in den Brennkammern (6,20) unterhalb und oberhalb des Kohle- oder Kokskuchens (4) gemessen wird, und der Δp > 30 Pa zur Auslösung des Druckluftstrahles (15) beträgt.

4. Verfahren nach Anspruch 2, dadurch **gekennzeichnet,** dass es sich bei dem Druckparameter um einen Druckunterschied handelt, der zwischen dem Gasraum (6) der Koksofenkammer (1) oberhalb des Kohle- oder Kokskuchens (4) und der Umgebungsatmosphäre gemessen wird, und der -70 Pa < Δp < +40 Pa zur Auslösung des Druckluftstrahles (15) beträgt.

5. Verfahren nach einem der Ansprüche 1 bis 4, **dadurch gekennzeichnet, dass** es sich bei dem Messparameter um einen Temperaturparameter handelt, der an mindestens einer Stelle im Koksofen (1) gemessen wird.

6. Verfahren nach Anspruch 5, **dadurch gekennzeichnet, dass** es sich bei dem Temperaturparameter um die Temperatur handelt, die im Gasraum (6) über dem Kokskuchen (4) gemessen wird, und die zur Auslösung des Druckluftstrahles (15) T = 1100 °C unterschreitet.

7. Verfahren nach einem der Ansprüche 1 bis 6, **dadurch gekennzeichnet, dass** es sich bei der Druckluft (15) um Luft mit atmosphärischer Zusammensetzung handelt.

8. Verfahren nach einem der Ansprüche 1 bis 6, **dadurch gekennzeichnet, dass** es sich bei der Druckluft (15) um Luft handelt, die sauerstoffangereichert ist.

9. Verfahren nach einem der Ansprüche 1 bis 6, **dadurch gekennzeichnet, dass** die Druckluft (15) durch reinen Sauerstoff ersetzt wird.

10. Verfahren nach einem der Ansprüche 1 bis 6, **dadurch gekennzeichnet, dass** es sich bei der Druckluft (15) um Luft handelt, die stickstoffangereichert ist.

11. Verfahren nach einem der Ansprüche 1 bis 6, **dadurch gekennzeichnet, dass** es sich bei der Druckluft (15) um Luft handelt, die mit dem teilweise oder vollständig verbrannten Abgas (29) der Koksofenkammer (1) vermischt ist.

12. Verfahren nach einem der Ansprüche 1 bis 11, **dadurch gekennzeichnet, dass** der Messwert mindestens eines Druck- oder Temperaturmessparameters durch eine digitale Rechnereinrichtung (31) erfasst, ausgewertet und gesteuert wird, so dass diese Rechnereinheit (31) in Abhängigkeit der Messwerte mindestens einen Druckluftstrahl (15) in eine Nebenrohrleitung (13) und die dazugehörigen "Downcomer"-Kanäle (10) einschaltet.

13. Verfahren nach einem der Ansprüche 1 bis 12, **dadurch gekennzeichnet, dass** der Messwert mindestens eines Druck- oder Temperaturmessparameters durch eine digitale Rechnereinrichtung (31) erfasst, ausgewertet und gesteuert wird, so dass diese Rechnereinheit (31) in Abhängigkeit der Messwerte mindestens einen Druckluftstrahl (15) in eine Verteilerleitung (14) und den dazugehörigen "Downcomer"-Kanal (10) einschaltet.

14. Verfahren nach einem der Ansprüche 1 bis 13, **dadurch gekennzeichnet**, **dass** mehrere Messwerte (32) bestimmt werden, so dass eine kombinierte Messung und Auswertung von Temperatur (32a)- und Druckmesssignalen (32b) vorgenommen wird, und der Teilstrom an Druckluft (15) periodisch in Abhängigkeit von mindestens zwei Meßparametern (32) in mindestens einen "Downcomer-Kanal" (10) geleitet wird.

15. Koksofenkammer (1), enthaltend eine Vorrichtung zur automatischen Entfernung von Kohlenstoffablagerungen (11) aus den Strömungskanälen (10) von "Non-Recovery" und "Heat-Recovery"-Koksöfen oder deren kokskammerseitigen Eintrittsöffnungen des "Downcomer"-Querschnittes (10), umfassend
• eine Druckluftleitung (12), die auf der Ofendecke (17) einer Koksofenbank, welche aus mehreren Koksofenkammern (1) aufgebaut ist, installiert ist, und diese die Koksofenkammern (1) in Querrichtung miteinander verbindet,
**dadurch gekennzeichnet, dass**
• die Druckluftleitung (12) auf der Decke (17) mindestens einen Abzweig besitzt, welcher im weiteren Strömungsverlauf in eine absperrbare Nebenrohrleitung (13) mündet, welche in einem in einer seitlichen Koksofenwand (9) angeordneten "Downcomer"-Kanal (10) einer Koksofenkammer (1) ein Rohrende (19) zur Auslassung von Druckluft (15) besitzt, und
• das Rohrende (19) so angeordnet ist, dass die Luft (15) auf die Stellen strömt, an denen sich erfahrungsgemäß die meisten Ablagerungen (11) bilden, und an mindestens einer Stelle im Koksofen (1) eine Messsonde (32) für Druck (32a) oder Temperatur (32) angeordnet ist, und
• die Vorrichtung eine digitale Rechnereinrichtung (31) besitzt, welche die Regelwerte mindestens eines Drucksensors (32a) oder eines Thermoelementes (32b) erfasst, auswertet und steuert, so dass durch diese Rechnereinrichtung (31) in Abhängigkeit der Messwerte mindestens ein Druckluftstrahl (15) in der Nebenrohrleitung (13) und in mindestens einem Downcomer-Kanal (10) eingeschaltet wird.

16. Koksofenkammer (1) nach Anspruch 15, **dadurch gekennzeichnet, dass** die Druckluftleitung (12) auf der Decke (17) der Koksofenbank mindestens einen Abzweig besitzt, welcher im weiteren Strömungsverlauf in eine absperrbare Nebenrohrleitung (13) mündet, die in Ofenlängsrichtung von der Maschinenseite zur Koksseite des Ofens (1) verläuft, und von der im weiteren Strömungsverlauf mindestens eine weitere Verteilerleitung (14) abzweigt, welche in ein Rohrende (19) mündet, welches in einem "Downcomer"-Kanal (10) zur Auslassung von Druckluft (15) geeignet ist.

17. Koksofenkammer (1) nach einem der Ansprüche 15 oder 16, **dadurch gekennzeichnet, dass** in jeden "Downcomer"-Kanal (10) jeder Koksofenkammer (1) einer Koksofenkammerbank ein Rohrende (19) mündet, welches zur Auslassung von Druckluft (12) geeignet ist.

18. Koksofenkammer (1) nach einem der Ansprüche 15 bis 17, **dadurch gekennzeichnet, dass** mindestens ein Rohrende (19) einen Düsenaufsatz besitzt, welcher zur Ausdüsung eines Druckluftstrahles (15) geeignet ist.

19. Koksofenkammer (1) nach einem der Ansprüche 15 bis 18, **dadurch gekennzeichnet, dass** mindestens ein Rohrende (19) horizontal abgewinkelt ist.

20. Koksofenkammer (1) nach einem der Ansprüche 15 bis 19, **dadurch gekennzeichnet, dass** das Rohrende aus einem hitzebeständigen Eisenwerkstoff besteht.

21. Koksofenkammer (1) nach einem der Ansprüche 15 bis 19, **dadurch gekennzeichnet, dass** das Rohrende aus einem keramischen Silikawerkstoff besteht.

22. Koksofenkammer (1) nach einem der Ansprüche 15 bis 19, **dadurch gekennzeichnet, dass** das Rohrende aus einem Korundwerkstoff besteht.

23. Koksofenkammer (1) nach einem der Ansprüche 15 bis 22, **dadurch gekennzeichnet, dass** die Nebenrohrleitung (13) eine automatisierbare Hahnkonstruktion (18c) als Absperrvorrichtung (18) zur Regelung des Druckluftflusses (15) besitzt.

24. Koksofenkammer (1) nach einem der Ansprüche 15 bis 22, **dadurch gekennzeichnet, dass** die Nebenrohrleitung (13) eine automatisierbare Schieberkonstruktion (18a) als Absperrvorrichtung (18) zur Regelung des Druckluftflusses besitzt.

25. Koksofenkammer (1) nach einem der Ansprüche 15 bis 22, **dadurch gekennzeichnet, dass** mindestens ein Rohrende (19) mit oder ohne Düsenaufsatz eine automatisierbare Hahnkonstruktion (18c) als Absperrvorrichtung (18) zur Regelung des Druckluftflusses besitzt.

26. Koksofenkammer (1) nach einem der Ansprüche 15 bis 22, **dadurch gekennzeichnet, dass** mindestens ein Rohrende (19) mit oder ohne Düsenaufsatz eine automatisierbare Schieberkonstruktion (18a) als Absperrvorrichtung (18) zur Regelung des Druckluftflusses besitzt.

27. Koksofenkammer (1) nach einem der Ansprüche 15 bis 26, dadurch gekenn**zeichnet,** dass die Absperrvorrichtung (18) zur Regelung des Druckluftflusses (15) hydraulisch betätigt wird.

28. Koksofenkammer (1) nach einem der Ansprüche 15 bis 26, **dadurch gekennzeichnet, dass** die Absperrvorrichtung (18) zur Regelung des Druckluftflusses (15) elektrisch betätigt wird.

29. Koksofenkammer (1) nach einem der Ansprüche 15 bis 26, **dadurch gekennzeichnet, dass** die Absperrvorrichtung (18) zur Regelung des Druckluftflusses (15) pneumatisch betätigt wird.

30. Koksofenkammer (1) nach einem der Ansprüche 15 bis 29, **dadurch gekennzeichnet, dass** zur Druckmessung 1 bis 24 Druckmesssonden (32a) durch die Inspektionsverschlüsse (16) in die "Downcomer"-Kanäle (10) der von Kohlenstoffbelägen (11) zu befreienden Koksofenkammer (1) geführt werden.

31. Koksofenkammer (1) nach einem der Ansprüche 15 bis 29, **dadurch gekennzeichnet, dass** zur Druckmessung 1 bis 3 Druckmesssonden (32a) durch die Ofendecke (17) der von Kohlenstoffbelägen (11) zu befreienden Koksofenkammer (1) geführt werden.

32. Koksofenkammer (1) nach einem der Ansprüche 15 bis 29, **dadurch gekennzeichnet, dass** zur Druckmessung 1 bis 2 Druckmesssonden (32a) durch die Koksofenkammertüren (2) der von Kohlenstoffbelägen (11) zu befreienden Koksofenkammer (1) geführt werden.

33. Koksofenkammer (1) nach einem der Ansprüche 15 bis 29, **dadurch gekennzeichnet, dass** zur Druckmessung 1 bis 4 Druckmesssonden (32a) durch die seitlichen Stirnwände (28) der Ofenkammer (1), welche sich über der Koksofenkammertür (2) befinden und den Primärheizraum (6) abdecken, geführt werden.

34. Koksofenkammer (1) nach einem der Ansprüche 15 bis 29, **dadurch gekennzeichnet, dass** zur Druckmessung 1 bis 8 Druckmesssonden durch die seitlichen Stirnwände (9) der Ofenkammer (1), welche sich unter der Koksofenkammertür (2) befinden und den Sekundärheizraum (20) oder die Sekundärluftsohle (26) abdecken, geführt werden.

35. Koksofenkammer (1) nach einem der Ansprüche 15 bis 29, **dadurch gekennzeichnet, dass** in den Verbindungskanälen (20a) zwischen dem Sekundärheizraum (20) unterhalb der Kohlekuchens (4) und der Abgassammelleitung (27) der Koksofenbank zur Druckmessung 1 bis 2 Druckmesssonden (32a) angeordnet werden.

36. Koksofenkammer (1) nach einem der Ansprüche 15 bis 29, **dadurch gekennzeichnet, dass** in der Abgassammelleitung (27), welche quer zur Koksofenbank auf der Ofendecke (17) verläuft, zur Druckmessung 1 bis 2 Druckmesssonden (32a) angeordnet werden.

37. Koksofenkammer (1) nach einem der Ansprüche 15 bis 29, **dadurch gekennzeichnet, dass** in der Abgassammelleitung (27), welche quer zur Koksofenbank unterhalb der Koksofenkammertüren (2) verläuft, zur Druckmessung 1 bis 2 Druckmesssonden (32a) angeordnet werden.

38. Koksofenkammer (1) nach einem der Ansprüche 15 bis 37, **dadurch gekennzeichnet, dass** durch die Koksofenkammertüren (2) der von Kohlenstoffbelägen (11) zu befreienden Koksofenkammer (1) mindestens ein Thermoelement (32b) in den Gasraum (6) oberhalb des Kokskuchens (1) geführt wird.

39. Koksofenkammer (1) nach einem der Ansprüche 15 bis 37, **dadurch gekennzeichnet, dass** durch die Inspektionsverschlüsse (16) in die "Downcomer"-Kanäle (10) der von Kohlenstoffbelägen (11) zu befreienden Koksofenkammer (9) mindestens ein Thermoelement (32b) geführt wird.

40. Koksofenkammer (1) nach einem der Ansprüche 15 bis 37, **dadurch gekennzeichnet, dass** im Gewölbescheitel durch die Ofendecke (17) der von Kohlenstoffbelägen (11) zu befreienden Koksofenkammer (1) mindestens ein Thermoelement (32b) geführt wird.

## Claims

1. Method for automatic removal of carbon deposits (11) from flow channels (10) of "Non-Recovery" and "Heat-Recovery" coke ovens and the entrance openings of the downcomer cross section (10) thereof which are on the coke chamber side, wherein
• a coke oven bank (22) comprised of several coke oven chambers (1) having two lateral coke oven chamber walls (9) each and "downcomer" channels (10) arranged therein is supplied with compressed air (15) via compressed air main (19),
**characterized in that**
• a partial stream of compressed air (15) streaming into the "downcomer" channels (10) and being lockable is branched off into at least one coke oven chamber (1), and
• the compressed air (15) is fed via a pipe end (19) into the downcomer channels (10), which pipe end is arranged such that the air (15) streams onto the spots where empirically the majority of deposits (11) accumulate, and
• this partial stream of compressed air (15) is periodically conducted into at least one "downcomer channel" (10) depending on at least one measuring parameter (32) for pressure (32a) or temperature (32b) so that carbon deposits (11) contained therein can be removed by a compressed air blow (15) injected into the "downcomer" channel (10).

2. Method according to Claim 1, **characterized in that** the measuring parameter is a pressure parameter measured at least at one spot in a coke oven (1).

3. Method according to Claim 2, **characterized in that** the pressure parameter is a pressure differential measured in the combustion chambers (6, 20) underneath and above the coal and coke cake (4), and which amounts to □p > 30 Pa to trigger the compressed air blow (15).

4. Method according to Claim 2, **characterized in that** the pressure parameter is a pressure differential measured between the gas space (6) of the coke oven chamber (1) above the coal or coke cake (4) and the ambient atmosphere, and which amounts to -70 Pa < □p < +40 Pa to trigger the compressed air blow (15).

5. Method according to one of Claims 1 to 4, **characterized in that** the measuring parameter is a temperature parameter measured at least at one spot in the coke oven (1).

6. Method according to Claim 5, **characterized in** that the temperature parameter is the temperature measured in the gas space (6) above the coke cake (4), and which is less than T = 1100 °C to trigger the compressed air blow (15).

7. Method according to one of Claims 1 to 6, **characterized in** that the compressed air (15) is air with an atmospheric composition.

8. Method according to one of Claims 1 to 6, **characterized** in that the compressed air (15) is air which is enriched with oxygen.

9. Method according to one of Claims 1 to 6, **characterized** in that the compressed air (15) is replaced with pure oxygen.

10. Method according to one of Claims 1 to 6, **characterized in that** the compressed air (15) is air which is enriched with nitrogen.

11. Method according to one of Claims 1 to 6, **characterized in that** the compressed air (15) is air which is mixed with the partially or completely burnt waste gas (29) of the coke oven chamber (1).

12. Method according to one of Claims 1 to 11, **characterized in** that the measuring value of at least one pressure or temperature measuring parameter is recorded, evaluated, and controlled by a digital computer unit (31) so that this computer unit (31) depending on the measuring values turns-on at least one compressed air blow (15) into an ancillary piping (13) and the associated "downcomer" channels (10).

13. Method according to one of Claims 1 to 12, **characterized in that** the measuring value of at least one pressure or temperature measuring parameter is recorded, evaluated, and controlled by a digital computer unit (31) so that this computer unit (31) depending on the measuring values turns-on at least one compressed air blow (15) into a distribution mains (14) and the associated "downcomer" channels (10).

14. Method according to one of Claims 1 to 13, **characterized in** that a plurality of measured values (32) are determined, such that a combined measurement and evaluation of temperature (32a) and pressure measuring signals (32b) is performed, and the partial stream of compressed air (15) is periodically conducted into at least one downcomer channel (10) depending on at least two measuring parameters (32).

15. Coke oven chamber (1) containing a device for automatic removal of carbon deposits (11) from flow channels (10) of "Non-Recovery" and "Heat-Recovery"-coke ovens or the entrance openings of the downcomer cross section (10) thereof which are on the coke chamber side, the said coke oven chamber comprised of
• a compressed air mains (12) installed on the oven top (17) of a coke oven bank built-up of several coke oven chambers (1) and connecting the coke oven chambers (1) to each other in transverse direction,
**characterized** in that
• the compressed air mains (12) on the top (17) is comprised of at least one branch which in the further course of flow terminates in a lockable ancillary piping (13) which in a "downcomer" channel (10) in a coke oven chamber (1) arranged in a lateral coke oven wall (9) has a pipe end (19) to emit compressed air (15), and
• the pipe end (19) is arranged in such a way that the air (15) streams onto the spots where empirically the majority of deposits (11) accumulate, and a measuring probe (32) for pressure (32a) or temperature (32b) is arranged at at least one spot in the coke oven (1), and
• the device has a digital computer (31), which picks up, evaluates and controls the control values from at least one pressure sensor (32a) or one thermocouple (32b), such that at least one blow of compressed air (15) into the ancillary piping (13) and into at least one downcomer channel (10) is turned on by this computer (31) depending on the measured values.

16. Coke oven chamber (1) according to Claim 15, **characterized in that** the compressed air main (12) on the top (17) of the coke oven bank has at least one branch which in the further course of flow terminates in a lockable ancillary piping (13) which extends in longitudinal oven direction from the pusher side to the coke side of the oven (1), and from which in the further course of flow at least another distribution main (14) branches off which terminates in a pipe end (19) arranged in a "downcomer" channel (10) and which is suitable to emit compressed air (15).

17. Coke oven chamber (1) according to one of Claims 15 or 16, **characterized in that** a pipe end (19) which is suitable to emit compressed air (12) terminates in each "downcomer" channel (10) of each coke oven chamber (1) of a coke oven chamber bank.

18. Coke oven chamber (1) according to one of Claims 15 to 17, **characterized in that** at least one pipe end (19) is comprised of a built-on nozzle jet attachment which is suitable to eject a compressed air blow (15).

19. Coke oven chamber (1) according to one of Claims 15 to 18, **characterized in that** at least one pipe end (19) is horizontally angled.

20. Coke oven chamber (1) according to one of Claims 15 to 19, **characterized in that** the pipe end is made from a heat-resistant iron material.

21. Coke oven chamber (1) according to one of Claims 15 to 19, **characterized in that** the pipe end is made from a ceramic silica material.

22. Coke oven chamber (1) according to one of Claims 15 to 19, **characterized in that** the pipe end is made from a corundum material.

23. Coke oven chamber (1) according to one of Claims 15 to 22, **characterized in** that the ancilllary piping (13) has an automatable valve cock element (18c) serving as shutoff device (18) to control the compressed air flow (15).

24. Coke oven chamber (1) according to one of Claims 15 to 22, **characterized in that** the ancilllary piping (13) has an automatable slide gate element (18a) serving as shutoff device (18) to control the compressed air flow.

25. Coke oven chamber (1) according to one of Claims 15 to 22, **characterized** in that at least one pipe end (19) with or without a built-on nozzle jet attachment has an automatable valve cock element (18c) serving as shutoff device (18) to control the compressed air flow.

26. Coke oven chamber (1) according to one of Claims 15 to 22, **characterized** in that at least one pipe end (19) with or without a built-on nozzle jet attachment has an automatable slide gate element (18a) serving as shutoff device (18) to control the compressed air flow.

27. Coke oven chamber (1) according to one of Claims 15 to 26, **characterized** in that the shutoff device (18) to control the compressed air flow (15) is hydraulically actuated.

28. Coke oven chamber (1) according to one of Claims 15 to 26, **characterized** in that the shutoff device (18) to control the compressed air flow (15) is electrically actuated.

29. Coke oven chamber (1) according to one of Claims 15 to 26, **characterized in that** the shutoff device (18) to control the compressed air flow (15) is pneumatically actuated.

30. Coke oven chamber (1) according to one of Claims 15 to 29, **characterized in** that 1 to 24 pressure measuring probes (32a) for pressure measurement are guided through the inspection opening ports (16) into the "downcomer" channels (10) of the coke oven chamber (1) to be liberated from carbon deposits (11).

31. Coke oven chamber (1) according to one of Claims 15 to 29, **characterized in that** 1 to 3 pressure measuring probes (32a) for pressure measurement are guided through the oven top (17) of the coke oven chamber (1) to be liberated from carbon deposits (11).

32. Coke oven chamber (1) according to one of Claims 15 to 29, **characterized in that** 1 to 2 pressure measuring probes (32a) for pressure measurement are guided through the coke oven chamber doors (2) of the coke oven chamber (1) to be liberated from carboy deposits (11).

33. Coke oven chamber (1) according to one of Claims 15 to 29, **characterized in** that 1 to 4 pressure measuring probes (32a) for pressure measurement are guided through the lateral front walls (28) of the oven chamber (1) which are located above the coke oven chamber door (2) and cover the primary heating space (6).

34. Coke oven chamber (1) according to one of Claims 15 to 29, **characterized in that** 1 to 8 pressure measuring probes for pressure measurement are guided through the lateral front walls (9) of the oven chamber (1), which are located underneath the coke oven chamber door (2) and cover the secondary heating space (20) or in the secondary air sole (26).

35. Coke oven chamber (1) according one of Claims 15 to 29, **characterized in that** 1 to 2 pressure measuring probes (32a) for pressure measurement are arranged in the connecting channels (20a) between the secondary heating space (20) underneath the coal cake (4) and the waste gas collecting duct (27) of the coke oven bank.

36. Coke oven chamber (1) according to one of Claims 15 to 29, **characterized** in that 1 to 2 pressure measuring probes (32a) for pressure measurement are arranged in the waste gas collecting duct (27) which extends transversely to the coke oven bank on the oven top (17).

37. Coke oven chamber (1) according to one of Claims 15 to 29, **characterized in that** 1 to 2 pressure measuring probes (32a) for pressure measurement are arranged in the waste gas collecting duct (27) which extends transversely to the coke oven bank underneath the coke oven chamber doors (2).

38. Coke oven chamber (1) according to one of Claims 15 to 37, **characterized in that** at least one thermocouple (32b) is guided into the gas space (6) above the coke cake (1) through the coke oven chamber doors (2) of the coke oven chamber (1) to be liberated from carbon deposits (11).

39. Coke oven chamber (1) according to one of Claims 15 to 37, **characterized in** that at least one thermocouple (32b) is guided through the inspection opening ports (16) into the "downcomer" channels (10) of the coke oven chamber (1) to be liberated from carbon deposits (11).

40. Coke oven chamber (1) according to one of Claims 15 to 37, **characterized in** that at least one thermocouple (32b) is guided at the vault crest through the oven top (17) of the coke oven chamber (1) to be liberated from carbon deposits (11).

## Revendications

1. Procédé pour l'enlèvement automatique de dépôts de carbone (11) des canaux d'écoulement (10) de fours à coke sans récupération et avec récupération de chaleur et des ouvertures d'entrée de la section transversale du conduit de descente (10), du côté de la chambre à coke, desdits fours à coke, dans lequel
- une série de fours à coke (22), qui se compose de plusieurs chambres de four à coke (1) ayant chacune deux parois latérales de chambre de four à coke (9) et des canaux de descente (10) disposés dans celles-ci, est alimentée en air sous pression (15) par le biais d'une conduite d'air sous pression (19),
**caractérisé en ce que**
- dans au moins une chambre de four à coke (1) est prélevé un courant partiel de l'air sous pression (15) qui s'écoule dans les canaux de descente (10) et qui peut être bloqué, et
- l'air sous pression (15) est introduit dans les canaux de descente (10) par le biais d'une extrémité de tube (19) qui est disposée de telle sorte que l'air (15) s'écoule aux emplacements auxquels se forment, selon l'expérience, la majorité des dépôts (11), et
- ce courant partiel d'air sous pression (15) est conduit périodiquement en fonction d'au moins une paramètre de mesure (32) de la pression (32a) ou de la température (32b) dans au moins un canal de descente (10), de telle sorte que des dépôts de carbone (11) contenus dans celui-ci puissent être enlevés par un jet d'air sous pression (15) introduit dans le canal de descente (10).

2. Procédé selon la revendication 1, **caractérisé en ce que** le paramètre de mesure est un paramètre de pression qui est mesuré au niveau d'au moins un emplacement dans le four à coke (1).

3. Procédé selon la revendication 2, **caractérisé en** ce que le paramètre de pression est une différence de pression qui est mesurée dans les chambres à combustion (6, 20) en dessous et au-dessus du gâteau de charbon ou de coke (4) et qui vaut Δp > 30 Pa pour le déclenchement du jet d'air sous pression (15).

4. Procédé selon la revendication 2, caractérisé **en** ce que le paramètre de pression est une différence de pression qui est mesurée entre l'espace de gaz (6) de la chambre de four à coke (1) au-dessus du gâteau de charbon ou de coke (4) et l'atmosphère environnante, et qui vaut -70 Pa < Δp < +40 Pa pour le déclenchement du jet d'air sous pression (15).

5. Procédé selon l'une quelconque des revendications 1 à 4, **caractérisé en ce que** le paramètre de mesure est un paramètre de température qui est mesuré au niveau d'au moins un emplacement dans le four à coke (1).

6. Procédé selon la revendication 5, **caractérisé en ce** que le paramètre de température est la température qui est mesurée dans l'espace de gaz (6) au-dessus du gâteau de coke (4), et qui, pour le déclenchement du jet d'air sous pression (15), est en dessous de T = 1100 °C.

7. Procédé selon l'une quelconque des revendications 1 à 6, **caractérisé en** ce que l'air sous pression (15) est de l'air de composition atmosphérique.

8. Procédé selon l'une quelconque des revendications 1 à 6, **caractérisé** en ce que l'air sous pression (15) est de l'air enrichi en oxygène.

9. Procédé selon l'une quelconque des revendications 1 à 6, **caractérise en ce** que l'air sous pression (15) est remplacé par de l'oxygène pur.

10. Procédé selon l'une quelconque des revendications 1 à 6, **caractérisé** en ce que l'air sous pression (15) est de l'air enrichi en azote.

11. Procédé selon l'une quelconque des revendications 1 à 6, **caractérisé en** ce que l'air sous pression (15) est de l'air qui est mélangé avec le gaz d'échappement (29) partiellement ou complètement brûlé de la chambre de four à coke (1).

12. Procédé selon l'une quelconque des revendications 1 à 11, **caractérisé en ce que** la valeur de mesure d'au moins un paramètre de mesure de pression ou de température est détectée, analysée et commandée par une unité de calcul numérique (31) de telle sorte que cette unité de calcul (31), en fonction des valeurs de mesure, déclenche au moins un jet d'air sous pression (15) dans une conduite tubulaire auxiliaire (13) et dans les canaux de descente associés (10).

13. Procédé selon l'une quelconque des revendications 1 à 12, **caractérisé en ce** que la valeur de mesure d'au moins un paramètre de mesure de pression ou de température est détectée, analysée et commandée par une unité de calcul numérique (31), de telle sorte que cette unité de calcul (31), en fonction des valeurs de mesure, déclenche au moins un jet d'air sous pression (15) dans une conduite de distribution (14) et le canal de descente associé (10).

14. Procédé selon l'une quelconque des revendications 1 à 13, **caractérisé** en ce que plusieurs valeurs de mesure (32) sont déterminées, de telle sorte qu'une mesure et une analyse combinées de signaux de mesure de température (32a) et de pression (32b) soient effectuées, et le courant partiel d'air sous pression (15) est conduit périodiquement en fonction d'au moins deux paramètres de mesure (32) dans au moins un canal de descente (10).

15. Chambre de four à coke (1), comprenant un dispositif pour l'enlèvement automatique de dépôts de carbone (11) des canaux d'écoulement (10) de fours à coke sans récupération et avec récupération de chaleur ou des ouvertures d'entrée de la section transversale du conduit de descente (10), du côté de la chambre à coke, desdits fours à coke, comprenant
- une conduite d'air sous pression (12) qui est installée sur le couvercle de four (17) d'une série de fours à coke qui est constituée de plusieurs chambres de four à coke (1) et qui relie entre elles les chambres de four à coke (1) dans la direction transversale,
**caractérisée en** ce **que**
- la conduite d'air sous pression (12) sur le couvercle (17) possède au moins une ramification qui débouche dans le trajet d'écoulement suivant dans une conduite tubulaire auxiliaire (13) pouvant être bloquée, qui possède, dans un canal de descente (10) disposé dans une paroi latérale de four à coke (9) d'une chambre de four à coke (1), une extrémité de tube (19) pour la sortie de l'air sous pression (15), et
- l'extrémité de tube (19) est disposée de telle sorte que l'air (15) s'écoule aux emplacements auxquels se forment, selon l'expérience, la majorité des dépôts (11), et une sonde de mesure (32) pour la pression (32a) ou la température (32b) est disposée au niveau d'au moins un emplacement dans le four à coke (1), et
- le dispositif possède une unité de calcul numérique (31) qui détecte, analyse et commande les valeurs de réglage d'au moins un capteur de pression (32a) ou d'un élément thermique (32b), de telle sorte qu'au moins un jet d'air sous pression (15) soit déclenché dans la conduite tubulaire auxiliaire (13) et dans au moins un canal de descente (10) par cette unité de calcul (31) en fonction des valeurs de mesure.

16. Chambre de four à coke (1) selon la revendication 15, **caractérisée en ce que** la conduite d'air sous pression (12) possède, sur le couvercle (17) de la série de fours à coke, au moins une ramification qui débouche dans le trajet d'écoulement suivant dans une conduite tubulaire auxiliaire (13) pouvant être bloquée, qui s'étend dans la direction longitudinale du four depuis le côté machine vers le côté coke du four (1), et de laquelle part au moins une conduite de distribution supplémentaire (14) dans le trajet d'écoulement suivant, laquelle débouche dans une extrémité de tube (19) qui est appropriée pour permettre la sortie d'air sous pression (15) dans un canal de descente (10).

17. Chambre de four à coke (1) selon l'une quelconque des revendications 15 ou 16, **caractérisée en** ce que dans chaque canal de descente (10) de chaque chambre de four à coke (1) d'une série de chambres de four à coke débouche une extrémité de tube (19) qui est appropriée pour la sortie d'air sous pression (12).

18. Chambre de four à coke (1) selon l'une quelconque des revendications 15 à 17, **caractérisée en ce qu'**au moins une extrémité de tube (19) possède une coiffe de buse qui est appropriée pour pulvériser un jet d'air sous pression (15).

19. Chambre de four à coke (1) selon l'une quelconque des revendications 15 à 18, **caractérisée en ce qu'**au moins une extrémité de tube (19) est coudée horizontalement.

20. Chambre de four à coke (1) selon l'une quelconque des revendications 15 à 19, **caractérisée en ce que** l'extrémité de tube se compose d'un matériau ferreux résistant à la chaleur.

21. Chambre de four à coke (1) selon l'une quelconque des revendications 15 à 19, **caractérisée en ce que** l'extrémité de tube se compose d'un matériau à base de silice céramique.

22. Chambre de four à coke (1) selon l'une quelconque des revendications 15 à 19, **caractérisée en ce que** l'extrémité de tube se compose d'un matériau à base de corindon.

23. Chambre de four à coke (1) selon l'une quelconque des revendications 15 à 22, **caractérisée en ce que** la conduite tubulaire auxiliaire (13) possède une construction de robinet automatisable (18c) en tant que dispositif de blocage (18) pour la régulation du flux d'air sous pression (15).

24. Chambre de four à coke (1) selon l'une quelconque des revendications 15 à 22, **caractérisée en ce que** la conduite tubulaire auxiliaire (13) possède une constriction à tiroir automatisable (18a) en tant que dispositif de blocage (18) pour la régulation du flux d'air sous pression.

25. Chambre de four à coke (1) selon l'une quelconque des revendications 15 à 22, **caractérisée en** ce qu'au moins une extrémité de tube (19) avec ou sans coiffe de buse possède une construction de robinet automatisable (18c) en tant que dispositif de blocage (18) pour la régulation du flux d'air sous pression.

26. Chambre de four à coke (1) selon l'une quelconque des revendications 15 à 22, **caractérisée en ce qu'**au moins une extrémité de tube (19) avec ou sans coiffe de buse possède une construction à tiroir automatisable (18a) en tant que dispositif de blocage (18) pour la régulation du flux d'air sous pression.

27. Chambre de four à coke (1) selon l'une quelconque des revendications 15 à 26, **caractérisée en ce que** le dispositif de blocage (18) pour la régulation du flux d'air sous pression (15) est actionné hydrauliquement.

28. Chambre de four à coke (1) selon l'une quelconque des revendications 15 à 26, **caractérisée en** ce que le dispositif de blocage (18) pour la régulation du flux d'air sous pression (15) est actionné électriquement.

29. Chambre de four à coke (1) selon l'une quelconque des revendications 15 à 26, **caractérisée** en ce que le dispositif de blocage (18) pour la régulation du flux d'air sous pression (15) est actionné pneumatiquement.

30. Chambre de four à coke (1) selon l'une quelconque des revendications 15 à 29, **caractérisée** en ce **que** pour la mesure de pression, 1 à 24 sondes de mesure de pression (32a) sont guidées à travers les fermetures d'inspection (16) dans les canaux de descente (10) de la chambre de four à coke (1) devant être débarrassée des dépôts de carbone (11).

31. Chambre de four à coke (1) selon l'une quelconque des revendications 15 à 29, **caractérisée en ce que** pour la mesure de pression, 1 à 3 sondes de mesure de pression (32a) sont guidées à travers le couvercle de four (17) de la chambre de four à coke (1) devant être débarrassée des dépôts de carbone (11).

32. Chambre de four à coke (1) selon l'une quelconque des revendications 15 à 29, **caractérisée** en **ce que** pour la mesure de pression, 1 à 2 sondes de mesure de pression (32a) sont guidées à travers les portes de chambre de four à coke (2) de la chambre de four à coke (1) devant être débarrassée des dépôts de carbone (11).

33. Chambre de four à coke (1) selon l'une quelconque des revendications 15 à 29, **caractérisée en ce que** pour la mesure de pression, 1 à 4 sondes de mesure de pression (32a) sont guidées à travers les parois frontales latérales (28) de la chambre de four (1), lesquelles se trouvent au-dessus de la porte de chambre de four à coke (2) et recouvrent l'espace de chauffage primaire (6).

34. Chambre de four à coke (1) selon l'une quelconque des revendications 15 à 29, **caractérisée en ce que** pour la mesure de pression, 1 à 8 sondes de mesure de pression sont guidées à travers les parois frontales latérales (9) de la chambre de four (1), qui se trouvent en dessous de la porte de chambre de four à coke (2) et qui recouvrent l'espace de chauffage secondaire (20) ou la semelle d'air secondaire (26).

35. Chambre de four à coke (1) selon l'une quelconque des revendications 15 à 29, **caractérisée en ce que** 1 à 2 sondes de mesure de pression (32a) sont disposées dans les canaux de liaison (20a) entre l'espace de chauffage secondaire (20) en dessous du gâteau de charbon (4) et la conduite de collecte de gaz d'échappement (27) de la série de fours à coke en vue de la mesure de pression.

36. Chambre de four à coke (1) selon l'une quelconque des revendications 15 à 29, **caractérisée** en ce que 1 à 2 sondes de mesure de pression (32a) sont disposées dans la conduite de collecte de gaz d'échappement (27) qui s'étend transversalement à la série de fours à coke sur le couvercle de four (17), en vue de la mesure de pression.

37. Chambre de four à coke (1) selon l'une quelconque des revendications 15 à 29, **caractérisée en ce que** 1 à 2 sondes de mesure de pression (32a) sont disposées dans la conduite de collecte de gaz d'échappement (27) qui s'étend transversalement à la série de fours à coke en dessous des portes de chambre de four à coke (2), en vue de la mesure de pression.

38. Chambre de four à coke (1) selon l'une quelconque des revendications 15 à 37, **caractérisée en** ce qu'au moins un élément thermique (32b) est guidé dans l'espace de gaz (6) au-dessus du gâteau de coke (1) à travers les portes de chambre de four à coke (2) de la chambre de four à coke (1) devant être débarrassée des dépôts de carbone (11).

39. Chambre de four à coke (1) selon l'une quelconque des revendications 15 à 37, **caractérisée en** ce qu'au moins un élément thermique (32b) est guidé à travers les fermetures d'inspection (16) dans les canaux de descente (10) de la chambre de four à coke (1) devant être débarrassée des dépôts de carbone (11).

40. Chambre de four à coke (1) selon l'une quelconque des revendications 15 à 37, **caractérisée** en ce qu'au moins un élément thermique (32b) est guidé dans la voûte à travers le couvercle de four (17) de la chambre de four à coke (1) devant être débarrassée des dépôts de carbone (11).
